# EUROPÄISCHE PATENTSCHRIFT

(11) **EP 4 121 272 B1**
(45) Veröffentlichungstag und Bekanntmachung des Hinweises auf die Patenterteilung: **25.06.2025**
(21) Anmeldenummer: 21712807.3
(22) Anmeldetag: 16.03.2021
(51) Int. Cl.: B29C 55/06, B29C 55/28

(54) **STRECKVORRICHTUNG SOWIE EIN VERFAHREN ZUM VERSTRECKEN EINER KUNSTSTOFFFOLIE IN IHRER TRANSPORTRICHTUNG**
STRETCHING DEVICE AND METHOD FOR STRETCHING A PLASTIC FILM IN THE TRANSPORT DIRECTION THEREOF
DISPOSITIF D'ÉTIRAGE ET PROCÉDÉ D'ÉTIRAGE D'UNE FEUILLE PLASTIQUE DANS LE SENS DE TRANSPORT DE CELLE-CI

(30) Priorität: 20.03.2020 DE 102020203644; 15.07.2020 DE 102020208857; 21.12.2020 DE 102020007806
(43) Veröffentlichungstag der Anmeldung: 25.01.2023
(73) Patentinhaber: Windmöller & Hölscher KG, 49525 Lengerich (DE)
(72) Erfinder: BACKMANN, Martin, 49525 Lengerich (DE); GOLUBSKI, Karsten, 49525 Lengerich (DE); SOLLERT, Manuel, 49525 Lengerich (DE); GROSS, Raphael, 49525 Lengerich (DE)
(86) Internationale Anmeldenummer: PCT/EP2021/056676
(87) Internationale Veröffentlichungsnummer: WO 2021/185830

(56) Entgegenhaltungen:
- WO-A1-2010/015512
- WO-A1-2018/079213
- DE-A1- 2 403 918
- DE-U1- 202020 000 221
- TW-A- 201 012 730

## Beschreibung

Die Erfindung betrifft eine Streckvorrichtung sowie ein Verfahren zum Verstrecken einer Kunststofffolie in ihrer Transportrichtung.

Eine solche Streckvorrichtung dient dazu, Eigenschaften einer Kunststofffolie gezielt zu beeinflussen. Durch eine solche Streckung wird insbesondere die Orientierung der in der Kunststofffolie (im Folgenden auch kurz als "Folie" bezeichnet) enthaltenen Moleküle verändert. Um eine Streckung herbeizuführen, umfasst die Streckvorrichtung eine erste Walze, welche mit einem ersten Antrieb antreibbar und mit einer ersten Rotations- bzw. Umfangsgeschwindigkeit rotierbar ist. Weiterhin umfasst die Streckvorrichtung eine zweite Walze, welche mit einem zweiten Antrieb antreibbar und mit einer zweiten Rotations- bzw. Umfangsgeschwindigkeit rotierbar ist. Im Transportweg der Kunststofffolie ist die zweite Walze stromabwärts der ersten Walze angeordnet.

Die Streckung der Kunststofffolie erfolgt nun dadurch, dass die zweite Rotationsgeschwindigkeit größer als die erste Rotationsgeschwindigkeit ist. Unter Rotationsgeschwindigkeit ist im Zusammenhang mit der Streckung die Rotationsgeschwindigkeit zu verstehen, die die Folie verspürt. Diese kann daher auch als Umfangsgeschwindigkeit der ersten Walze und der zweiten Walze bezeichnet werden.

Bei der Streckung kann es aber auch zu verschiedenen Problemen kommen. So haften an der Kunststofffolie nach der Streckung oft Monomere, die während einer Herstellung der Kunststofffolie ausgasen, oder auch Stäube an, die durch das Strecken in die Folie eingedrückt werden. Auch lässt oft die Wärmeübertragung zwischen Folie und Walze zu wünschen übrig. Weiterhin können sich aber auch Eigenschaften der Folie, insbesondere geometrische Eigenschaften wie das Dickenprofil, in einer Richtung quer zur Transportrichtung der Folie und auch die Planlage der Folie durch das Strecken verändern.

Die DE 20 2020 000 221 U1 zeigt eine gattungsgemäße Streckvorrichtung, bei der zumindest eine der beteiligten Walzen von außen nach innen luftdurchströmbar ist.

Allerdings ist die Wirksamkeit dieser Vorrichtung beeinträchtigt, da mit dieser Walze über die gesamte Walzenoberfläche die Luft von außen nach innen strömt, so dass mehr Luft hindurchströmt als für die dort genannten Zwecke notwendig ist.

Die Aufgabe der vorliegenden Erfindung ist es daher, eine Streckvorrichtung vorzuschlagen, mit welcher sich zumindest ein Teil der genannten Probleme reduzieren lässt.

Erfindungsgemäß wird diese Aufgabe durch sämtliche Merkmale des Anspruchs 1 gelöst. In den abhängigen Ansprüchen sind mögliche Ausgestaltungen der Erfindung angegeben.

In einem ersten Aspekt der Erfindung ist eine gattungsgemäße Streckvorrichtung zum Strecken einer Kunststofffolie vorgesehen. Diese Streckvorrichtung ist gekennzeichnet durch Mittel zur Veränderung der Luftmenge zwischen der Kunststofffolie und Flächenelementen der ersten Walze und/oder der zweiten Walze, auf welchen die Folie aufliegt. Mit dieser Erfindung ist es somit ermöglicht, die Luftmenge zwischen der Kunststofffolie und den Flächenelementen, auf welchen die Folie aufliegt, zu verändern. Dies umfasst somit die Verringerung der Luftmenge, aber auch die Vergrößerung der Luftmenge. Die Kunststofffolie läuft an einer Auftreffkante auf die jeweilige Walze auf und verlässt diese Walze wieder an einer Ablaufkante. Die Auftreffkante und die Ablösekante zusammen mit den Seitenrändern definieren das Gesamtflächenelement, auf welchem die Folie höchstens aufliegen kann. Das tatsächliche Flächenelement, auf welchem die Folie aufliegt, kann jedoch kleiner sein als das Gesamtflächenelement.

Durch die Veränderung der Luftmenge können gezielt die Probleme vermieden werden. So kann durch eine Vergrößerung der Luftmenge das Eindrücken von Stäuben oder Monomeren in die Folie verringert werden. Durch eine

Verringerung der Luftmenge kann eine Übertragung von Wärme zwischen der Walze und der Kunststofffolie deutlich verbessert werden, da Luft nur eine geringe Wärmemenge aufnehmen kann und daher einen schlechten Wärmeleiter darstellt. Eine verringerte Luftmenge verbessert also insgesamt die Wärmeleitung.

Eine Verringerung der Luftmenge kann ferner dazu dienen, die Folie stärker an der Walze anhaften zu lassen, so dass der Folie Freiheitsgrade genommen werden, sich geometrisch zu verändern. Insbesondere kann erreicht werden, dass sich die Neigung, das Dickenprofil quer zur Transportrichtung zu verändern, verringert. Auch eine Verschlechterung der Planlage der Folie kann durch die erfindungsgemäße Maßnahme verringert werden.

Erfindungsgemäßen Streckvorrichtung ist weiterhin vorgesehen, dass die erste und/oder die zweite Walze wenigstens einen Hohlraum umfasst, welcher in Umfangsrichtung mit zumindest einem Trennelement in zumindest zwei Segmente unterteilt ist, wobei zumindest ein Segment mit einem gegenüber dem Umgebungsdruck verringertem oder erhöhtem Luftdruck beaufschlagbar ist. Jedes Segment kann somit mit unterschiedlichen Luftdrücken beaufschlagt werden, so dass beispielsweise in axialer Richtung der Walze die Luftmenge zwischen der Kunststofffolie und Flächenelementen der ersten Walze und/oder der zweiten Walze, auf welchen die Folie aufliegt, unterschiedlich veränderbar ist.

Trennelemente unterteilen in Umfangsrichtung den inneren Hohlraum einer der genannten Walzen in Segmente, also segmentieren den Hohlraum. Solche Trennelemente verlaufen folglich parallel zur Längsrichtung der jeweiligen Walze. Insbesondere kann ein Walzenmantel um eine Walzenachse rotierbar gelagert sein, wobei das Trennelement oder die Trennelemente relativ zur Achse unbeweglich angeordnet sein können. Damit ist es beispielsweise möglich, ein Segment unterhalb der Flächenelemente der ersten Walze und/oder der zweiten Walze, auf welchen die Folie aufliegt, anzuordnen. Folglich wird nur im Bereich dieser Flächenelemente ein Unterdruck und/oder ein Überdruck generiert, während in einem anderen Segment im Wesentlichen Umgebungsdruck herrscht. Auf diese Weise wird die Wirksamkeit der Mittel zur Veränderung der Luftmenge erhöht, da keine Umgebungsluft angesaugt, sondern lediglich die Luftmenge an den relevanten Bereichen verändert wird. Zumindest im Bereich der Ablöselinie, deren Bedeutung weiter unten im Zusammenhang mit einer Ablösewalze verdeutlicht wird, kann ein Segment vorgesehen sein, welches mit einem Überdruck beaufschlagbar ist. Damit wird erreicht, dass die Folie sich von der ersten und/oder zweiten Walze entlang einer realen Ablöselinie ablöst, welche nur wenig von der Sollablöselinie abweicht.

Ein Segment, in dessen Wirkbereich die Folie nicht aufliegt, kann mit einem Überdruck beaufschlagt werden, wobei eine Luftströmung aus dem Inneren der Walze nach außen bewegbar ist. Damit kann einer kontinuierliche Abreinigung von Durchgangsöffnungen erfolgen, so dass eine mit der Zeit zunehmende Verschmutzung und Verstopfung der Durchgangsöffnungen vermeidbar ist.

Es können in Umfangsrichtung auch wenigstens drei Trennelemente vorgesehen sein, so dass zumindest drei Segmente vorgesehen sein können. Es ergibt sich beispielsweise eine Anordnungsmöglichkeit, bei der im Auflaufbereich der Folie ein mit einem Unterdruck beaufschlagtes Segment und im Auslaufbereich ein mit einem Überdruck beaufschlagtes Segment angeordnet sind. In allen verbleibenden Bereichen kann Umgebungsdruck herrschen. Somit kann im Bereich, in welchem die Folie auf die Oberfläche der Walze trifft (Auflaufbereich), die eingeschleppte Luft abgesaugt werden, wodurch die erfindungsgemäßen Vorteile erzielt werden. Im Bereich, in welchem die Folie die Oberfläche wieder verlässt (Auslaufbereich), kann dagegen mit einem Überdruck die Folie von der Oberfläche der Walze gelöst werden, wodurch vermieden wird, dass sich die Folie über ihre Breite gesehen an unterschiedlichen Umfangswinkeln der Walze löst. Ein Vermeiden dieses Effekts führt zu verbesserten Eigenschaften, insbesondere geometrischen Eigenschaften der Folie. Das Aufprägen eines Überdrucks kann auch beispielsweise dazu verwendet werden, Durchgangsöffnungen im Walzenmantel zu reinigen.

Die einzelnen Segmente können hinsichtlich der Größe des Unter- und/oder Überdrucks einzeln ansteuerbar sein. Die Ansteuerung kann durch eine Rechen- und Steuereinheit erfolgen, welche für die Ansteuerung Messdaten von Sensoren mit Solldaten vergleicht. Solche Messdaten können von Messsensoren, mit welchen die Messung der geometrischen Eigenschaften der Folie, insbesondere des Dickenprofils der Folie, durchführbar ist, der Rechen- und Steuereinheit übermittelbar sein. Auf diese Weise kann einer Regelung des Über- und/oder Unterdrucks in einem jeden Segment aufgebaut werden.

Dabei kann vorgesehen sein, dass die Mittel zur Veränderung der Luftmenge lediglich in den Randbereichen der Walze angeordnet sind. Damit wird vermieden, dass die verwertbare Nutzbreite der Folie auf einem möglichst ebenen Teil der Walze läuft und nur die Randbereiche der Folie anhaften. Da diese Randbereiche oft später abgetrennt werden, wirken sich hier negative Einflüsse der Mittel zur Veränderung der Luftmenge auf die Folienrandbereiche nicht negativ aus, jedoch bleiben die Vorteile der Erfindung erhalten.

Um insbesondere die Luftmenge verringern zu können, ist es in einer ersten Erfindungsvariante vorgesehen, dass die Oberfläche der ersten Walze und/oder der zweiten Walze mit Vertiefungen versehen ist. Damit wird insbesondere die tatsächliche Größe aller Flächenelemente, auf denen die Folie aufliegt, verringert. Weiterhin sind Bereiche an den Rändern dieser Flächenelemente gegenüber diesen Flächenelementen vertieft und stellen damit Volumenelemente zur Verfügung, in die die Luft eindringen kann. Zwischen den Flächenelementen, auf denen die Folie aufliegt, und der Folie selbst verbleibt nun nur noch ein Bruchteil der Luft. In diesem Zusammenhang ist zu erläutern, dass das Wort "aufliegt" nicht damit gleichzusetzen ist, dass sich die Folie und der Flächenbereich vollflächig berühren. Es kann stellenweise oder sogar ganzflächig eine sehr geringfügige Menge Luft verbleiben, so dass sich zwar makroskopisch eine vollflächige Berührung ergibt, mikroskopisch jedoch nicht vollflächig. Durch die geschilderte Maßnahme wird erreicht, dass die Folie stärker an der Walze anhaftet, so dass die weiter oben beschriebenen Vorteile erzielt werden.

Auch ringförmig oder spiralförmig ausgestaltete Nuten können Vertiefungen in dem im vorstehenden Abschnitt beschriebenen Sinne sein. Spiralförmig ausgestaltete Nuten können dabei eingängig oder mehrgängig sein, wobei mehrgängige Nuten einen gleichen und/oder einen entgegengesetzten Drehsinn haben können (Kreuznuten). Insbesondere solche Nuten können in den Bereichen, auf denen die Folie aufliegt, eine Luftmenge aufnehmen und in den Bereichen wieder an die Umgebung abgeben, in denen die Folie nicht aufliegt. Die Breiten und/oder Tiefen solcher Nuten können weniger als 2 mm, bevorzugt weniger als 1 mm und insbesondere weniger als 0,5 mm betragen. Der Übergang von den Flächenelementen, auf denen die Folie aufliegt, und den Nuten kann dabei abgerundet oder mit Schrägen versehen sein, um Beschädigungen der Folie zu vermeiden.

In einer weiteren Erfindungsvariante umfassen die Mittel zur Veränderung der Luftmenge Durchgangsöffnungen in der Oberfläche der ersten Walze und/oder der zweiten Walze, wobei die Durchgangsöffnungen eine fluidkommunizierende Verbindung zwischen der Außenoberfläche und einem Hohlraum innerhalb der ersten Walze und/oder der zweiten Walze darstellen. Mit solchen Durchgangsöffnungen ist es ermöglicht, dass zumindest ein Teil der zwischen der Folie und den Flächenelementen der jeweiligen Walze, auf welchen die Folie aufliegt, eingeschlossenen Luft in den Hohlraum der Walze abführbar ist. Folglich verbleibt zwischen der Folie und den Flächenelementen eine verringerte Luftmenge, so dass die Folie stärker an den Flächenelementen der Walzenoberflächen haftet und die nicht erwünschten Effekte in verringertem Maße oder gar nicht mehr zeigt.

In einer vorteilhaften Ausgestaltung der Erfindung ist vorgesehen, dass die Mittel zur Veränderung der Luftmenge Durchgangsöffnungen in der Oberfläche der ersten Walze und/oder der zweiten Walze umfassen, wobei zumindest ein Teil der Durchgangsöffnungen durch ein poröses Material, insbesondere durch ein mikroporöses Material, zur Verfügung stellbar ist. Hierdurch ist es möglich, eine große Anzahl kleiner Kanäle zu schaffen, welche als Durchgangsöffnungen dienen. Dieses hat den Vorteil, dass die Öffnungen an der Außenoberfläche der Walze klein sind und deren Ränder keine negativen Auswirkungen auf die Folie, beispielsweise in Form von Abdrücken, haben. Somit wird die oben beschriebene Aufgabe gelöst, ohne neue Nachteile in Kauf nehmen zu müssen. Das poröse Material kann dabei den Mantel der Walze bilden oder zumindest ein Bestandteil davon sein. Die mittlere Porengröße des porösen Materials kann zwischen 5 und 100, insbesondere zwischen 10 und 60 und bevorzugt zwischen 20 und 45 Mikrometern betragen. In einer Erfindungsvariante ist vorgesehen, dass ein poröses Material, insbesondere ein mikroporöses Material nur eine äußere Beschichtung einer ansonsten geschlossenen Walzenoberfläche darstellt. So kann beispielsweise ein geschlossenes Rohr, beispielsweise aus Metall, vorgesehen sein, auf welches das poröse Material aufgetragen ist oder wird. Die Hohlräume, die das poröse Material zur Verfügung stellt, können nun die Luft aufnehmen, die sich zwischen der Folie und der Walze befindet.

Unabhängig davon, ob das poröse Material Durchgangsöffnungen oder lediglich Hohlräume zur Luftaufnahme zur Verfügung stellt, kann es vorgesehen sein, die Porengröße in axialer Richtung der Walze zu variieren. Insbesondere an den Rändern des Walzenmantels kann das durch das poröse Material zur Verfügung gestellte Volumen pro Flächenelement größer sein als im mittleren Bereich, so dass die Folie an den Rändern stärker an der Walze anhaftet.

Die Außenoberfläche der Walze, die zumindest teilweise durch poröses Material gebildet ist, kann zur Vermeidung von Beschädigungen der Folie mit einer Beschichtung versehen sein, welche insbesondere eine geringere Härte aufweist als das poröse Material.

Ein poröses Material kann ein Sintermaterial, insbesondere ein Sintermetall oder ein Sinterkunststoff sein. Ein Sintermaterial ist ein Material, welches durch einen Sinterprozess hergestellt wurde. Dabei werden feinkörnige Stoffe, die keramisch oder metallisch sein oder Kunststoff umfassen können, - oft unter erhöhtem Druck - erhitzt, wobei die Temperaturen jedoch unterhalb der Schmelztemperatur der Hauptkomponenten bleiben, so dass die Gestalt des Werkstückes erhalten bleibt. Beispielsweise kann die Gestalt hülsenförmig sein, wobei eine Hülse entsteht, die später auf einen Grundkörper aufgebracht werden kann. Grundkörper und Hülse können dann die Walze bilden. Die Herstellung einer solchen Hülse kann auch in einem additiven Fertigungsverfahren erfolgen, wobei aus einem pulverförmigen Rohstoff durch lokale Erhitzung ein dreidimensionaler Körper erzeugbar ist. Die Körnigkeit des Materials führt dazu, dass zwischen den Körnern Kanäle verbleiben, welche Durchgangsöffnungen bilden. Die Umfangsfläche einer derart hergestellten Walze kann zusätzlich geschliffen und/oder poliert sein, um eine Beschädigung der Folie zu vermeiden. Um jedoch einen unbeabsichtigten Verschluss der Durchgangsöffnungen durch den Abrieb zu vermeiden, kann die Oberfläche der Walze anschließend noch durch ein Ätzverfahren behandelt werden. Die Durchgangsöffnungen sind in der Regel nicht gradlinig ausgestaltet, was jedoch der Fähigkeit, Luft in das Walzeninnere abzuleiten, keinen Abbruch tut. Ein Sintermaterial ist meist ein sehr hartes Material, so dass sich trotz der hohen Zugkräfte innerhalb einer Streckvorrichtung nur eine geringe Durchbiegung ergibt, so dass insbesondere die geometrischen Eigenschaften der Folie kaum beeinflusst werden. Zudem ist die Herstellung eines Sintermaterials in der Regel relativ preisgünstig.

Um die Luftmenge zu reduzieren, ist es gemäß einer alternativen oder zusätzlichen Ausgestaltung der Erfindung vorgesehen, dass die Mittel zur Veränderung der Luftmenge wenigstens in einem Teil eines Walzenmantels der ersten und/oder der zweiten Walze Durchgangsöffnungen umfassen, wobei zumindest ein Teil der Durchgangsöffnungen durch Bohrungen gebildet ist. Ein Walzenmantel kann dabei die Walzenoberfläche umfassen, so dass Bohrungen folglich von der Umgebung der Walze bis in das Walzeninnere hineinreichen. Es ist auch möglich, den Walzenmantel mehrschichtig auszubilden. Beispielsweise kann ein innerer Teil eines Walzenmantels vorgesehen sein, welcher Bohrungen umfasst. Ein äußerer Teil des Walzenmantels kann ein poröses, insbesondere ein mikroporöses Material umfassen. Auf diese Weise kann vermieden werden, dass sich Ränder einer Bohrung auf der Folie abzeichnen und diese dadurch unbrauchbar wird.

Die Bohrungen können kleiner als 2 mm, bevorzugt kleiner 1 mm, und insbesondere kleiner als 0,5 mm sein. Die Übergänge von Bohrungen zur Oberfläche des Teils des Walzenmantels können dabei abgerundet oder konisch ausgeformt sein. Mit dieser Maßnahme werden wiederum Beschädigungen der Folie vermieden. Eine Mehrzahl an Bohrungen kann gleichmäßig über den Walzenmantel verteilt sein, wobei pro Flächenelement eine bestimmte Anzahl an Bohrungen vorgesehen sein kann. Die Abstände von jeweils zwei benachbarten Bohrungen können jedoch variiert sein. Vorteilhaft ist es insbesondere, wenn die Anzahl der Bohrungen pro Flächenelement oder die Anzahl der Durchgangsöffnungen pro Flächenelement variiert ist, insbesondere in Längsrichtung des Walzenmantels, also in Richtung der Drehachse. Insbesondere an den Rändern des Walzenmantels kann die Anzahl der Bohrungen bzw. der Durchgangsöffnungen pro Flächenelement größer sein als im mittleren Bereich, so dass die Folie an den Rändern stärker an der Walze anhaftet. Die Ränder können dabei jeweils ein Drittel der Walzenmantellänge einnehmen, so dass der mittlere Bereich auch ein Drittel umfasst. Der mittlere Bereich kann jedoch auch größer sein, so dass die Ränder jeweils entsprechend kleiner sind. Durch diese Variation der Anzahl der Bohrungen pro Flächenelement oder der Anzahl der Durchgangsöffnungen pro Flächenelement ist folglich im Allgemeinen der Volumenstrom, der durch die Wandung der Walze durchtritt, variierbar. Eine derartige Variation kann bei Sintermaterialien alternativ oder zusätzlich dadurch erreicht werden, dass die Schichtdicke des Sintermaterials variiert ist, so dass es für den Volumenstrom unterschiedliche Widerstände gibt.

In einer vorteilhaften Ausführungsform ist es denkbar, dass die erste und/oder zweite Walze mehrschichtig aufgebaut ist, wobei insbesondere eine Schicht relativ zu einer zweiten Schicht verschiebbar ausgebildet sein kann, wobei beide Schichten nach einer relativen Verschiebung lösbar verbindbar sind. Damit ist es beispielsweise möglich, dass eine an die Eigenschaften der Folie angepasste äußere Schicht auf einen Grundkörper aufschiebbar ist. Diese Ausführungsform ist zudem vorteilhaft, um bei Verschmutzung der Walze nur die Außenschicht auswechseln zu müssen. Eine solche Schicht kann dann gereinigt werden, während mit einer weiteren äußeren Schicht die Produktion der Folie fortgesetzt werden kann.

In einer weiteren Variante der Erfindung können die Mittel zur Veränderung der Luftmenge wenigstens einen Hohlraum umfassen, welcher mit einem gegenüber dem Umgebungsdruck verringerten Luftdruck beaufschlagbar ist. Es ist damit erreicht, dass ein Teil der Luftmenge, welche dem Hohlraum einer der Walzen zugeführt wird, beispielsweise über Durchgangsöffnungen, aus dem Hohlraum abführbar ist. Somit kann die durch die Bewegung der Folie und der Walze immer wieder neu eingetragene Luft fortwährend abgeführt werden, so dass ein stationärer Zustand bezüglich der verringerten Luftmenge zwischen der Kunststofffolie und Flächenelementen der ersten Walze und/oder der zweiten Walze, auf welchen die Folie aufliegt, einstellbar ist. Eine Möglichkeit zur Beaufschlagung des Hohlraums bietet eine Drehdurchführung über einen Zapfen der jeweiligen Walze. An dieser Drehdurchführung kann ein Schlauch oder ein Rohr angeschlossen sein, welcher oder welches den Innenraum fluidkommunizierend mit einer Unterdruckquelle, insbesondere einer Pumpe, verbindet.

Weiterhin kann vorgesehen sein, dass wenigstens ein Hohlraum mit einem gegenüber dem Umgebungsdruck erhöhtem Druck beaufschlagbar ist. Damit wird es ermöglicht, Durchgangsöffnungen mittels eines Ausblasvorganges von Verschmutzungen zu befreien. Zusätzlich oder alternativ kann eine Saugeinrichtung vorgesehen sein, welche in einem Winkelbereich der ersten und/oder der zweiten Walze angeordnet ist, in dem keine Folie aufliegt, also zwischen der Ablöselinie und der Einlaufkante der Folie. Auf diese Weise ist sogar noch verbessert möglich, Verschmutzungen von der Oberfläche der Walze zu entfernen. Eine solche Saugeinrichtung kann sich zumindest teilweise in Richtung der Walzenachse erstrecken. Auch kann eine solche Saugeinrichtung mehrere voneinander getrennte Saugkammern aufweisen, deren Größen zudem veränderbar sein können, so dass die Saugeinrichtung mit unterschiedlichen Saugleistungen beaufschlagbar ist. In Bereichen in Richtung der Walze, die nicht mit der Folie in Berührung kommen, kann beispielsweise die Saugleistung geringer sein als in den übrigen Bereichen, da hier in der Regel eine geringere Verschmutzung zu befürchten ist. Eine Verschmutzung rührt oft daher, dass an der Folie Paraffine anhaften, die an Walzen abgegeben werden.

Um die Luftmenge zwischen der Kunststofffolie und Flächenelementen der ersten Walze und/oder der zweiten Walze, auf welchen die Folie aufliegt, verändern zu können, ist in einer Ausführungsform der Erfindung wenigstens eine Absaugeinrichtung vorgesehen, mit welcher Luft aus dem Bereich, in dem die Kunststofffolie in Transportrichtung mit der ersten und/oder der zweiten Walze in Kontakt tritt, absaugbar ist. Insbesondere beim Auflaufen der Folie auf die Walze gelangt die durch die Folie mitgeschleppte Luft zwischen die Flächenelemente der Walze und der Folie. Mittels einer Absaugeinrichtung kann nun diese Luft gezielt abgesaugt werden, so dass deutlich weniger Luft in den genannten Bereich eingetragen wird. Dadurch können die erfindungsgemäßen Vorteile erreicht werden.

Es kann alternativ oder ergänzend vorgesehen sein, den Bereich der Walze, auf dem die Folie nicht aufliegt, zumindest teilweise mit einer Abdeckvorichtung abzudecken, so dass in diesem Bereich der Umgebungsdruck nicht an der Walzenoberfläche anliegt. Insbesondere wenn im Walzenkörper ein geringerer Druck als der Umgebungsdruck anliegt und/oder wenn durch eine nahe der Walzenoberfläche angeordnete Absaugeinrichtung ein Unterdruck hervorgerufen wird, so kann eine Ansaugung von Luft aus der Umgebung (Falschluft) vermieden werden. Dies führt zu einer größeren Effektivität der Erfindung, da dann nur die von der Folie mitgeschleppte Luft, aber nicht etwaige von der Walze mitgeschleppte Luft abgeführt werden muss. Vorteilhaft anzuordnen. Folglich wird nur im Bereich dieser Flächenelemente ein Unterdruck und/oder ein Überdruck generiert, während in einem anderen Segment im Wesentlichen Umgebungsdruck herrscht. Auf diese Weise wird die Wirksamkeit der Mittel zur Veränderung der Luftmenge erhöht, da keine Umgebungsluft angesaugt, sondern lediglich die Luftmenge an den relevanten Bereichen verändert wird. Zumindest im Bereich der Ablöselinie, deren Bedeutung weiter unten im Zusammenhang mit einer Ablösewalze verdeutlicht wird, kann ein Segment vorgesehen sein, welches mit einem Überdruck beaufschlagbar ist. Damit wird erreicht, dass die Folie sich von der ersten und/oder zweiten Walze entlang einer realen Ablöselinie ablöst, welche nur wenig von der Sollablöselinie abweicht.

Ein Segment, in dessen Wirkbereich die Folie nicht aufliegt, kann mit einem Überdruck beaufschlagt werden, wobei eine Luftströmung aus dem Inneren der Walze nach außen bewegbar ist. Damit kann einer kontinuierliche Abreinigung von Durchgangsöffnungen erfolgen, so dass eine mit der Zeit zunehmende Verschmutzung und Verstopfung der Durchgangsöffnungen vermeidbar ist.

Es können in Umfangsrichtung auch wenigstens drei Trennelemente vorgesehen sein, so dass zumindest drei Segmente vorgesehen sein können. Es ergibt sich beispielsweise eine Anordnungsmöglichkeit, bei der im Auflaufbereich der Folie ein mit einem Unterdruck beaufschlagtes Segment und im Auslaufbereich ein mit einem Überdruck beaufschlagtes Segment angeordnet sind. In allen verbleibenden Bereichen kann Umgebungsdruck herrschen. Somit kann im Bereich, in welchem die Folie auf die Oberfläche der Walze trifft (Auflaufbereich), die eingeschleppte Luft abgesaugt werden, wodurch die erfindungsgemäßen Vorteile erzielt werden. Im Bereich, in welchem die Folie die Oberfläche wieder verlässt (Auslaufbereich), kann dagegen mit einem Überdruck die Folie von der Oberfläche der Walze gelöst werden, wodurch vermieden wird, dass sich die Folie über ihre Breite gesehen an unterschiedlichen Umfangswinkeln der Walze löst. Ein Vermeiden dieses Effekts führt zu verbesserten Eigenschaften, insbesondere geometrischen Eigenschaften der Folie. Das Aufprägen eines Überdrucks kann auch Richtung der Walze, die nicht mit der Folie in Berührung kommen, kann beispielsweise die Saugleistung geringer sein als in den übrigen Bereichen, da hier in der Regel eine geringere Verschmutzung zu befürchten ist. Eine Verschmutzung rührt oft daher, dass an der Folie Paraffine anhaften, die an Walzen abgegeben werden.

Um die Luftmenge zwischen der Kunststofffolie und Flächenelementen der ersten Walze und/oder der zweiten Walze, auf welchen die Folie aufliegt, verändern zu können, ist in einer Ausführungsform der Erfindung wenigstens eine Absaugeinrichtung vorgesehen, mit welcher Luft aus dem Bereich, in dem die Kunststofffolie in Transportrichtung mit der ersten und/oder der zweiten Walze in Kontakt tritt, absaugbar ist. Insbesondere beim Auflaufen der Folie auf die Walze gelangt die durch die Folie mitgeschleppte Luft zwischen die Flächenelemente der Walze und der Folie. Mittels einer Absaugeinrichtung kann nun diese Luft gezielt abgesaugt werden, so dass deutlich weniger Luft in den genannten Bereich eingetragen wird. Dadurch können die erfindungsgemäßen Vorteile erreicht werden.

Es kann alternativ oder ergänzend vorgesehen sein, den Bereich der Walze, auf dem die Folie nicht aufliegt, zumindest teilweise mit einer Abdeckvorrichtung abzudecken, so dass in diesem Bereich der Umgebungsdruck nicht an der Walzenoberfläche anliegt. Insbesondere wenn im Walzenkörper ein geringerer Druck als der Umgebungsdruck anliegt und/oder wenn durch eine nahe der Walzenoberfläche angeordnete Absaugeinrichtung ein Unterdruck hervorgerufen wird, so kann eine Ansaugung von Luft aus der Umgebung (Falschluft) vermieden werden. Dies führt zu einer größeren Effektivität der Erfindung, da dann nur die von der Folie mitgeschleppte Luft, aber nicht etwaige von der Walze mitgeschleppte Luft abgeführt werden muss. Vorteilhaft ist es in diesem Zusammenhang, wenn die Absaugeinrichtung und die Abdeckvorrichtung miteinander verbunden sind und eine Baugruppe bilden.

In einer Weiterbildung ist vorgesehen, dass die Absaugeinrichtung und/oder die Abdeckvorrichtung quer zur Transportrichtung der Kunststofffolie in Abschnitte unterteilt ist. Dabei ist es möglich, dass eine sich über die gesamte Breite der Kunststofffolie erstreckende Absaugeinrichtung in Segmente unterteilt ist. Es können aber auch einzelne, voneinander unabhängige Abschnitte vorgesehen sein. Dieser Fall ist insbesondere vorteilhaft, wenn es darum geht, Luft im Bereich der Ränder der Kunststofffolie abzusaugen, um beispielsweise den Einfluss des Streckens auf die geometrischen Eigenschaften der Folie in ihren Randbereich zu minimieren. Sind solche unabhängigen Abschnitte vorgesehen, ist es vorteilhaft, wenn diese in Querrichtung der Folie, also parallel zur Achse der jeweiligen Walze, mittels einer Positioniervorrichtung positionierbar sind, um die Abschnitte der Absaugeinrichtung an unterschiedliche Folienbreiten anpassen zu können.

Die einzelnen Abschnitte können hinsichtlich ihrer Saugleistung einzeln ansteuerbar sein. Die Ansteuerung kann durch eine Rechen- und Steuereinheit erfolgen, welche für die Ansteuerung Messdaten von Sensoren mit Solldaten vergleicht. Solche Messdaten können von Messsensoren, mit welchen die Messung der geometrischen Eigenschaften der Folie, insbesondere des Dickenprofils der Folie, durchführbar ist, der Rechen- und Steuereinheit übermittelbar sein. Auf diese Weise kann eine Regelung der Luftabsaugung aufgebaut werden.

Eine vorteilhafte Ausgestaltung der Erfindung sieht vor, dass die Mittel zur Veränderung der Luftmenge zwischen der Kunststofffolie und Flächenelementen der ersten Walze und/oder der zweiten Walze, auf welchen die Folie aufliegt, wenigstens eine Überdruckeinrichtung umfassen, mit welcher die der Walze abgewandte Oberfläche der Kunststofffolie mit unter Überdruck stehendem Fluid, insbesondere Luft, beaufschlagbar ist. Auf diese Weise wird die Rückseite der Folie, also die Seite, die der Walze abgewandt ist, mit einer Kraft beaufschlagt, die durch die unter Überdruck stehende Luft aufgebracht wird. Damit kann die Folie mit einer größeren Kraft an die Walze angedrückt werden, so dass ein geringerer Anteil der Luft in den Bereich zwischen Folie und Walze gelangen kann. Wie auch die zuvor beschriebene Absaugeinrichtung kann die Überdruckeinrichtung in Abschnitte unterteilt sein, welche zusätzlich in Richtung der Walzenachse positionsveränderbar sein können. Auch kann eine Steuerung und/oder Regelung des Überdrucks und/oder des Volumenstroms vorgesehen sein. Auch dies kann insbesondere abschnittsweise individuell geschehen.

Wenn insbesondere das als Überdruckeinrichtung ausgestaltete Mittel zur Veränderung der Luftmenge in den Randbereichen der Walze angeordnet ist, kann vorgesehen sein, dass das Fluid, mit welchem die Randbereiche der Walze, auf welchen insbesondere die Randbereiche der Folie aufliegen, mit einem kalten Fluid beaufschlagt wird. Mit "kaltem Fluid" ist ein Fluid gemeint, welches eine Temperatur unterhalb von 50 Grad Celsius, bevorzugt unterhalb 30 Grad Celsius, vorzugsweise unterhalb von 15 Grad aufweist. Vorteilhaft ist dabei, dass die Randbereiche der Folie vor dem Auflaufen auf die betreffende Walze eine höhere Steifigkeit als der Nutzbereich der Folie aufweisen, so dass die Randbereiche nicht mehr so stark nach innen wandern. Mit anderen Worten wird damit das Neck-in reduziert.

Um ein Neck-in zu reduzieren, kann eine Fixiereinrichtung vorgesehen sein. Diese kann beispielsweise im Bereich zwischen der ersten und der zweiten Walze vorgesehen sein. Die Fixiereinrichtung kann in diesem Fall aus zwei scheibenartigen Walzenpaaren bestehen, durch deren Walzenspalte jeweils ein Rand der Folie läuft. Auf diese Weise werden die durch das Längsstrecken verursachten und auf die Folienränder wirkenden Kräfte kompensiert oder zumindest reduziert. Fixiereinrichtungen können aber auch an oder auf der ersten und/oder der zweiten Walze angeordnet sein. Beispielsweise können dies Flächenelemente sein, die eine größere Haftung für die Folie bereitstellen als die übrigen Bereiche der Oberfläche der Walze. Eine Fixiereinrichtung ist in Querrichtung der Folie, also in axialer Richtung der ersten und/oder der zweiten Walze verschiebbar.

Um die Anhaftung der Folie an der ersten und/oder der zweiten Walze zu erhöhen, kann es vorgesehen sein, dass die Mittel zur Veränderung der Luftmenge zwischen der Kunststofffolie und Flächenelementen der ersten Walze und/oder der zweiten Walze, auf welchen die Folie aufliegt, wenigstens eine Elektrode umfassen, mit welcher die Kunststofffolie stromaufwärts oder an der Berührungslinie der Kunststofffolie mit der Walze elektrostatisch aufladbar ist. Aufgrund der elektrostatischen Aufladung der Folie wird eine elektrostatische Anziehungskraft oder Abstoßungskraft zwischen der Folie und der Walze hervorgerufen. Ist eine Anziehungskraft, also eine Kraft, die von der Folie aus gesehen auf die Walze gerichtet ist, vorhanden, so gelangt ein geringer Teil der mit der Folie mitgeschleppten Luft in den Zwischenraum zwischen Folie und Walze, so dass die Folie besser an der Walze anhaftet. Es können in axialer Richtung der jeweiligen Walze gesehen zumindest zwei aufeinander folgende Elektroden vorgesehen sein, deren elektrische Spannungen unabhängig voneinander einstellbar sind. Die elektrischen Spannungen können mittels einer Steuervorrichtung steuerbar sein. Auf diese Weise ist es möglich, die Auftrefflinie der Folie auf der Walze zu verändern und insbesondere zu optimieren. Im Idealfall ist diese Auftrefflinie eine Gerade. Diese Ausführungsvariante kann helfen, die Planlage der Folie zu verbessern. Zudem kann erreicht werden, dass die Ränder der Folie mit einer anderen Spannung und damit mit einer anderen induzierten Ladung trotz der größeren Dicke genauso an der Walze anhaften wie die mittleren Bereiche der Folie.

In einer weiteren Ausgestaltung der Erfindung kann eine Elektrode zusammen mit einer Überdruckeinrichtung, wie sie beispielsweise weiter oben beschrieben wurde, kombiniert werden. Damit ist es möglich, das Fluid, welches aus der Überdruckeinrichtung in Richtung auf die Folie strömt, elektrostatisch aufzuladen, wobei diese elektrostatische Aufladung auf die Folie auftragbar ist. Damit ist nochmals die Haftung der Folie auf der Walze verbesserbar.

Im Zusammenhang mit einer Elektrode kann es vorteilhaft sein, wenn in Transportrichtung der Folie hinter der ersten und/oder hinter der zweiten Walze eine Entladeeinrichtung vorgesehen ist. Damit lässt sich die elektrostatische Aufladung der Folie wiederum reduzieren oder sogar vollständig eliminieren, so dass ein Weiterverarbeitungsprozess, wie beispielsweise das Aufwickeln, nicht negativ beeinflusst wird. Insbesondere ist es vorteilhaft, wenn die Entladeeinrichtung im Sollablösepunkt der Folie von der ersten und/oder zweiten Walze oder in Transportrichtung der Folie davor angeordnet ist, um so eine Entladung der Folie spätestens im Bereich der Ablöselinie erreicht zu haben. Damit ist sichergestellt, dass Bereiche der Folie nicht unterschiedlich lange an der Walze haften bleiben, was zu Planlagefehlern führen könnte. Eine Entladeeinrichtung kann beispielsweise als geerdete Walze und/oder als Bürstenwalze ausgestaltet sein.

Eine für die Ausgestaltung der Erfindung geeignete erste und/oder zweite Walze kann zumindest teilweise ein Metall wie etwa Aluminium und/oder zumindest teilweise einen Kunststoff, insbesondere einen faserverstärkten Kunststoff umfassen. Die vorgenannten Werkstoffe können beispielsweise für einen Grundkörper einer ersten und/oder einer zweiten Walze Verwendung finden.

Weiterhin kann die erste und/oder die zweite Walze eine besonders bearbeitete Oberfläche umfassen. Bereits weiter oben wurde beschrieben, dass die Oberfläche ein gesintertes Material umfassen kann. Denkbar ist es, dass alternativ oder zusätzlich die Oberfläche eine Gummierung umfasst, zumindest teilweise mit Polytetrafluorethen (PTFE), bekannt als Teflon, beschichtet ist und/oder zumindest teilweise verchromt ist, um die Oberflächeneigenschaften besser an die Eigenschaften der Folie anpassen zu können. Insbesondere lassen sich bei empfindlichen Folien Kratzer vermeiden. In dem Fall, in dem Sintermaterial als Werkstoff für die erste und/oder zweite Walze verwendet worden ist, kann ein PFTE bereits vor dem Sinterprozess eingebettet sein, um ein Verstopfen der Durchgangsöffnungen zu vermeiden.

Um insbesondere die sogenannte Planlage einer Folie zu verbessern, kann wenigstens eine Ablösewalze vorgesehen sein, welche an die erste und/oder an die zweite Walze anstellbar ist. Eine Folie soll die erste oder die zweite Walze im Idealfall an einer Sollablöselinie verlassen, die parallel zur Längsachse der Walze verläuft. Die Sollablöselinie liegt dabei auf einer Fläche, welche eine gemeinsame Tangentialfläche der ersten und/oder zweiten Walze und der nachfolgenden Walze bildet. In der Realität ist diese Ablöselinie keine Gerade, was zu Fehlern in der Folie führen kann. Eine Ablösewalze ist dabei so positioniert, dass sie in der Sollablöselinie oder in Transportrichtung der Folie dahinter einen Walzenspalt mit der ersten und/oder zweiten Walze bildet. Damit wird erreicht, dass sich die reale Ablöselinie der Sollablöselinie angleicht. Insbesondere kann die Ablösewalze in Umfangsrichtung der ersten und/oder zweiten Walze verschiebbar sein.

In einer weiteren Ausführungsform der Erfindung ist vorgesehen, dass die erste und/oder die zweite Walze eine von einer zylindrischen Form abweichende Form aufweist. So kann beispielsweise vorgesehen sein, dass die Walze eine kegelförmige, eine konkave oder eine konvexe Form aufweist. Mit einer solchen Ausgestaltung der Walze kann, teilweise in Abhängigkeit von den Eigenschaften der Folie, verschiedenen Defekten, beispielsweise Planlagefehlern, entgegengewirkt werden.

Grundsätzlich ist es vorteilhaft, eine Temperiervorrichtung vorzusehen, mit welcher die Folienbereiche, die auf der ersten und/oder der zweiten Walze aufliegen oder sich im Abschnitt zwischen der ersten und der zweiten Walze befinden, hinsichtlich ihrer Temperatur verändern zu können. Es kann eine Temperaturerhöhung, aber auch einer Temperaturverringerung der Folie gewünscht sein. Insbesondere kann eine Temperiervorrichtung vorgesehen sein, mit welcher die genannten Folienbereiche in Querrichtung, also quer zu ihrer Transportrichtung, auf unterschiedliche Temperaturen bringbar sind. So kann es vorgesehen sein, die Randbereiche der Folie stärker zu kühlen als die übrigen Bereiche, um den Neck-in zu verringern.

Eine solche Temperiervorrichtung kann insbesondere in der ersten und/oder in der zweiten Walze integriert sein, so dass der Wirkungsgrad dieser Temperiervorrichtung hoch ist. Die Folie selbst wird in diesem Fall durch die Wärmeleitung der Walze temperiert. So kann der Walzenkörper beispielsweise mit wenigstens einer Rohrleitung durchzogen sein, durch welche ein temperiertes Fluid leitbar ist. Eine solche Rohrleitung kann sich dabei in axialer Richtung der Walze erstrecken, um eine schnelle Fluidverteilung zu gewährleisten. Diese Rohrleitung kann beispielsweise als Bohrung im Walzenmantel ausgeführt sein. Der Verlauf der Rohrleitung kann jedoch auch einen anderen Verlauf haben, etwa wendelförmig, um einen größeren Wärmeübertrag generieren zu können. In diesem Fall können kann die Rohrleitung durch ein Rohr oder einen Schlauch gebildet werden, der bei einem hohlen Walzenmantel innerhalb dieses Walzenmantels angeordnet ist. Sollte der Walzenmantel mehrschichtig ausgebildet sein, so kann die Rohrleitung auch zwischen zwei Schichten angeordnet sein. Es sind auch mehrere Rohrleitungen denkbar, um unterschiedliche Zonen der Walze mit unterschiedlichen Temperaturen beaufschlagen zu können. Die Zuführung des temperierten Fluids in die Walze erfolgt vorzugsweise durch eine oder mehrere stirnseitige Drehdurchführungen.

Insbesondere bei der Ausgestaltung der ersten und/oder der zweiten Walze in Kombination mit Sintermaterialien ist es denkbar, den Walzenmantel in zumindest zwei Schichten auszugestalten. Eine innere Schicht kann dabei im Vergleich zur Außenschicht gröbere Poren umfassen, so dass durch diese Poren das Fluid leitbar ist. Die Außenschicht kann dabei erfindungsgemäß die Luftmenge zwischen Folie und Walze durch Ableitung von Luft verringern.

In einer weiteren Variante der Erfindung kann die erste und/oder die zweite Walze wenigstens einen Heizdraht umfassen, welcher in einer Oberflächenschicht der Walze eingebettet ist. Diese Einbettung ist insbesondere in Kombination mit einer Ausgestaltung dieser Oberflächenschicht aus einem Sintermaterial erzeugbar.

Eine Temperiervorrichtung kann in einer vorteilhaften Ausführung der Erfindung als Induktionseinrichtung ausgestaltet sein. Insbesondere kann eine Einrichtung zur Bereitstellung eines Magnetfeldes, welche einen Teil der Induktionseinrichtung darstellt, innerhalb der Walze angeordnet sein, um die Effizienz dieser Temperiervorrichtung zu erhöhen. Jedoch ist, um einen einfacheren Aufbau zu gewährleisten, auch eine Anordnung außerhalb der Walze denkbar.

Auch alternative oder zusätzliche Temperiervorrichtungen sind denkbar, die auf weiteren physikalischen Prinzipien basieren. So kann beispielsweise auf Veränderung der Temperatur der Folie durch eine Vorrichtung zur Erzeugung von Infrarotstrahlung erfolgen. Diese ist vorzugsweise außerhalb einer der Walzen angeordnet. Auch ein temperiertes Gas, welches aus wenigstens einer Düse direkt auf die Folie leitbar ist, kann zur Temperierung vorgesehen sein. Als Gas ist insbesondere Luft vorgesehen. Vorrichtungen zur Erzeugung von Infrarotstrahlung und/oder eine Düse können auch innerhalb der Walze angeordnet sein.

In einer weiteren vorteilhaften Ausführungsform der Erfindung ist es vorgesehen, dass die Mittel zur Veränderung der Luftmenge zumindest eine Leitung umfassen, welche innerhalb der Walze, insbesondere innerhalb des Walzenmantels angeordnet sind. Weiterhin sind in dieser Ausführungsform Verbindungsleitungen vorgesehen, die in fluidkommunizierender Verbindung mit den Leitungen stehen und mit ihren anderen Enden in der Walzenoberfläche münden. Solche Verbindungsleitungen können wiederum Bohrungen sein oder Kanäle, die sich beispielsweise in einem gesinterten Material ergeben. Somit kann die Luft, die sich zwischen der Folie und der Walzenoberfläche befindet, durch die Verbindungsleitungen und die Leitungen abgeführt werden. Die Leitungen können beispielsweise in einer der Stirnflächen der jeweiligen Walze münden. Insbesondere können die Leitungen axiale Leitungen sein und/oder als axiale Bohrungen ausgestaltet sein. Bei einem mehrschichtigen Aufbau des Mantels der ersten und/oder der zweiten Walze kann auch eine innere Schicht vorgesehen sein, die nicht luftdurchlässig ist. Unter Verwendung von Abstandhaltern kann ein Ringraum zwischen der inneren Schicht und der Außenschicht zur Verfügung gestellt sein, in welchem die Luft sammelbar ist. Der Ringraum ist somit ebenfalls als Leitung im oben beschriebenen Sinn zu verstehen. Ein Ringraum ist insbesondere vorteilhaft, wenn die äußere Schicht aus einem Sintermaterial gebildet ist.

Bei einer Ausführungsform mit axialen Leitungen können diese an einer Stirnfläche der Walze oder an der Stirnfläche eines Anbauteils, wie etwa einem Zapfen enden. An dieser Stirnfläche kann ein relativ zur Walze feststehendes Bauteil angelegt sein, welches einen kreissegmentförmigen Hohlraum umfasst. Die Enden der Leitungen können nun bei der Drehung der Walzen diesen Hohlraum überstreichen. Wird nun an diesen Hohlraum ein Unterdruck oder ein Überdruck angelegt, so wird auch jede Leitung mit einem Unterdruck oder einem Überdruck beaufschlagt, welche durch die Rotation der Walze in den Wirkbereich des Hohlraums gelangt. Diese Beaufschlagung wird entsprechend wieder aufgehoben, wenn sich die jeweilige Leitung wieder außerhalb des Wirkbereichs befindet. Ein mit einem Unterdruck beaufschlagter Hohlraum ist vorzugsweise derart angeordnet, dass diejenigen Leitungen mit einem Unterdruck beaufschlagbar sind, die in fluidkommunizierender Verbindung mit Verbindungsleitungen stehen, deren Enden in den Oberflächenbereichen münden, auf denen die Folie aufliegt. Somit wird vermieden, dass zu viel Umgebungsluft angesaugt wird. Ein mit einem Überdruck beaufschlagter Hohlraum ist vorzugsweise derart angeordnet, dass diejenigen Leitungen mit einem Überdruck beaufschlagbar sind, die in fluidkommunizierender Verbindung mit Verbindungsleitungen stehen, deren Enden in den Oberflächenbereichen münden, auf denen die Folie nicht aufliegt und/oder an der Ablöselinie der Folie.

Es können entsprechend mehrere Bauteile der beschriebenen Art vorgesehen sein, beispielsweise eines, welches mit einem Überdruck beaufschlagbar ist und eines, welches mit einem Unterdruck beaufschlagbar ist.

Die oben genannte Aufgabe wird zusätzlich gelöst durch ein Verfahren zum Verstrecken einer Kunststofffolie in ihrer Transportrichtung mit einer ersten Walze, welche mit einem ersten Antrieb angetrieben und mit einer ersten Rotationsgeschwindigkeit rotiert wird, und mit einer zweiten Walze, welche mit einem zweiten Antrieb angetrieben und mit einer zweiten Rotationsgeschwindigkeit rotiert wird, wobei die zweite Rotationsgeschwindigkeit größer als die erste Rotationsgeschwindigkeit ist, wobei im Transportweg der Kunststofffolie die zweite Walze stromabwärts der ersten Walze angeordnet ist, wobei mit Mitteln zur Veränderung der Luftmenge zwischen der Kunststofffolie und Flächenelementen der ersten Walze und/oder der zweiten Walze, auf welchen die Folie aufliegt, die vorhandene Luftmenge verändert wird und wobei die erste und/oder die zweite Walze wenigstens einen Hohlraum umfassen, welcher in Umfangsrichtung mit zumindest einem Trennelement in zumindest zwei Segmente unterteilt ist, wobei zumindest ein Segment mit einem gegenüber dem Umgebungsdruck verringertem oder erhöhtem Luftdruck beaufschlagt wird.

Mit diesem erfindungsgemäßen Verfahren lassen sich die gleichen Vorteile erzielen, wie sie bereits im Zusammenhang mit einer erfindungsgemäßen Vorrichtung beschrieben worden sind.

In einem weiteren Aspekt der Erfindung ist eine Blasfolienanlage vorgesehen mit zumindest einem Extruder zur Erzeugung einer Kunststoffschmelze, einem Düsenkopf zur Erzeugung eines Folienschlauches aus der Kunststoffschmelze, einer Flachlegeeinrichtung zur Umwandlung des Folienschlauches in eine doppellagige Kunststofffolie, einer angetriebenen Abzugsvorrichtung zum Abziehen und Weitertransport der doppellagigen Kunststofffolie und einer Wickeleinrichtung zum Aufwickeln zumindest einer Lage der doppellagigen Kunststofffolie, wobei eine Streckvorrichtung vorgesehen ist, welche nach einem der Ansprüche 1 bis 12 und/oder gemäß der obigen Beschreibung ausgestaltet ist. Eine solche Blasfolienanlage kann optional eine Kalibriervorrichtung, welche in Transportrichtung der Flachlegeeinrichtung vorgeordnet ist, umfassen. Weiterhin kann eine Reversiervorrichtung vorgesehen sein, welche der Abzugsvorrichtung nachgeordnet ist und mit welcher Fehler, insbesondere Abweichungen von der mittleren Foliendicke, quer über die Folienbreite verlegbar sind. Eine erfindungsgemäße Streckvorrichtung kann nun stromabwärts der Abzugsvorrichtung angeordnet sein, beispielsweise zwischen der Abzugsvorrichtung und einer optionalen Reversiervorrichtung. Auch ist eine Anordnung der Streckvorrichtung zwischen einer Reversiervorrichtung und der Wickelvorrichtung denkbar. Die Kunststofffolie kann der Streckvorrichtung als flachgelegter Folienschlauch oder als einseitig oder zweiseitig geschnittene, doppellagige Kunststofffolie zugeführt werden. Eine einseitig geschnittene Kunststofffolie kann zuvor aufgeklappt worden sein und der Streckvorrichtung als einlagige Kunststofffolie zugeführt werden, welche insbesondere doppeltbreit ist. Eine zweiseitig geschnittene Kunststofffolie kann in ihre einzelnen Lagen separiert werden, wobei die Lagen jeweils einer einzelnen Streckvorrichtung zuführbar sind. Eine Wickeleinrichtung kann eine Wickelstelle zum Aufwickeln einer ungeschnittenen, einseitig geschnittenen oder beidseitig geschnittenen doppellagigen Kunststofffolie umfassen. Auch eine einseitig geschnittene, einlagige - also aufgeklappte - Kunststofffolie kann aufgewickelt werden. Es können aber auch zwei Wickelstellen vorgesehen sein zum Aufwickeln jeweils einer Lage der zuvor doppellagigen Kunststofffolie.

Weitere Vorteile, Merkmale und Einzelheiten der Erfindung gehen aus der nachfolgenden Beschreibung hervor, in der unter Bezugnahme auf die Figuren verschiedene Ausführungsbeispiele im Einzelnen erläutert sind. Dabei können die in den Ansprüchen und in der Beschreibung erwähnten Merkmale jeweils einzeln für sich oder beliebige Kombinationen erwähnter Merkmale erfindungswesentlich sein. Im Rahmen der gesamten Offenbarung gelten Merkmale und Einzelheiten, die im Zusammenhang mit dem erfindungsgemäßen Verfahren beschrieben sind, selbstverständlich auch im Zusammenhang mit der erfindungsgemäßen Streckvorrichtung und jeweils umgekehrt, so dass bezüglich der Offenbarung zu den einzelnen Aspekten der Erfindung stets wechselseitig Bezug genommen wird beziehungsweise werden kann. Die einzelnen Figuren zeigen:
- Fig. 1: Schematische Ansicht einer erfindungsgemäßen Streckeinrichtung
- Fig. 2: Eine Streckwalze einer Ausführungsform der Erfindung
- Fig. 3: Eine Streckwalze einer weiteren Ausführungsform der Erfindung
- Fig. 4: Eine Streckwalze einer weiteren Ausführungsform der Erfindung
- Fig. 5: Eine Ausführungsform der Erfindung mit einer Saugeinrichtung
- Fig. 6: Eine Ausführungsform der Erfindung mit einer Elektrode
- Fig. 7: Eine erfindungsgemäße Blasfolienanlage mit einer Streckeinrichtung
- Fig. 8: Eine weitere erfindungsgemäße Blasfolienanlage mit einer Streckeinrichtung
- Fig. 9: Eine Ausführungsform der Erfindung mit einer Düse
- Fig. 10: Eine Ausführungsform einer erfindungsgemäßen Vorrichtung mit einer Abdeckvorrichtung.
- Fig. 11: eine Variante einer Abdeckvorrichtung.
- Fig. 12: Eine Ausführungsform einer erfindungsgemäßen Vorrichtung,
- Fig. 13: Eine Ausführungsform einer erfindungsgemäßen Vorrichtung.

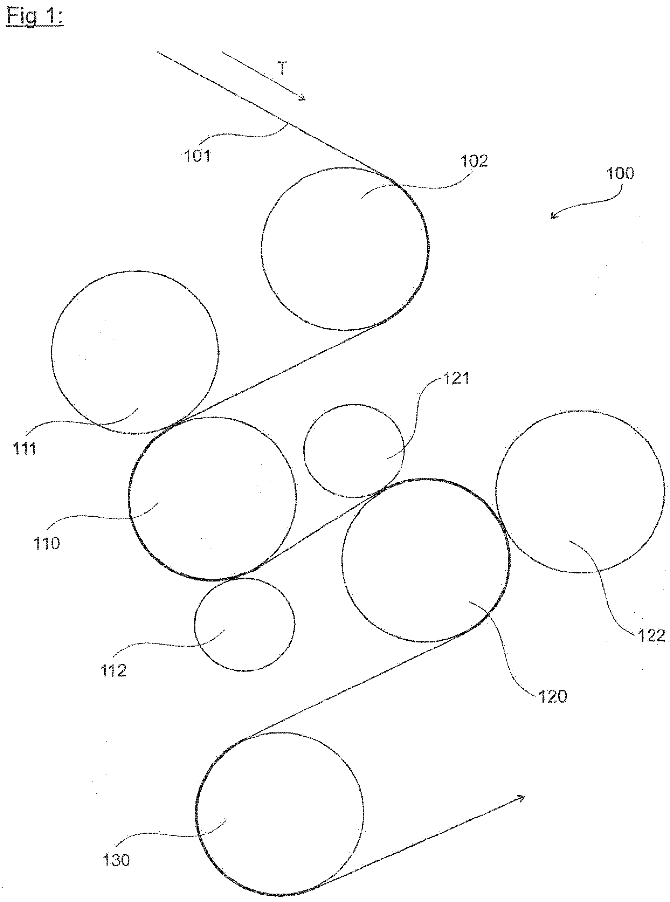

Die **Figur 1** zeigt eine schematische Darstellung einer erfindungsgemäßen Streckvorrichtung. Die Mittel zur Veränderung der Luftmenge zwischen der Kunststofffolie und Flächenelementen der ersten Walze und/oder der zweiten Walze, auf welchen die Folie aufliegt, sind in dieser Figur nicht zu erkennen und werden anhand der nachfolgenden Figuren näher erläutert. Die bahnförmige Kunststofffolie 101 läuft in Transportrichtung T in die Streckvorrichtung 100 ein. Die Kunststofffolie läuft zunächst auf eine oder nacheinander auf mehrere Vorheizwalzen auf, von welchen nur eine Vorheizwalze 102 gezeigt ist. Eine Vorheizwalze hat die Aufgabe, die Folie auf eine vordefinierte Temperatur zu bringen. Dazu ist eine Vorheizwalze in der Regel temperiert, wobei oft ein temperiertes Fluid in die Vorheizwalze eingebracht wird.

Nach dem Verlassen der Vorheizwalze(n) 102 gelangt die Folienbahn 101 auf eine erste Walze 110, welche generell auch als erste Streckwalze 110 bezeichnet werden kann. Diese Streckwalze ist mit einem nicht dargestellten Antrieb verbunden, beispielsweise einem eigenen Elektromotor, welcher die Walze 110 mit einer ersten Rotationsgeschwindigkeit rotierend antreibt.

Der ersten Walze 110 ist vorzugsweise einer erste Anlegewalze 111 zugeordnet, welche zusammen mit der ersten Walze 110 einen Einlaufspalt für die Folie zur Verfügung stellt. Vorzugsweise ist der Einlaufspalt oder der Laufweg der Folie 101 derart eingerichtet, dass diese 101 in dem Einlaufspalt tangential zu den Walzen 110, 111 läuft. Der Walzenspalt dient bereits dazu, die Luft zwischen der Streckwalze 110 und der Folie zu minimieren.

Der ersten Walze 110 ist darüber hinaus noch eine zweite Anlegewalze 112 zugeordnet, welche einen Auslaufspalt mit der Walze 110 bildet. Die zweite Anlegewalze 112 kann in Umfangsrichtung der ersten Walze 110 verstellbar sein. Die zweite Anlegewalze 112 dient dazu, dass die Folie die ersten Walze 110 entlang einer Linie, die parallel zur axialen Richtung der Walze 110 verläuft, verlässt.

In Transportrichtung T der Folie 101 gesehen ist stromabwärts eine zweite Walze 120 angeordnet, welche als zweite Streckwalze 120 bezeichnet werden kann. Auch diese Streckwalze 120 ist mit einem nicht dargestellten, weiteren Antrieb verbunden, beispielsweise einem eigenen Elektromotor, welcher die Walze 120 mit einer zweiten Rotationsgeschwindigkeit rotierend antreibt. Die zweite Rotationsgeschwindigkeit ist dabei größer als die erste Rotationsgeschwindigkeit, wobei dann die zweite Streckwalze eine größere Umfangsgeschwindigkeit hat als die erste Streckwalze. Dies führt dazu, dass die Folie 101 zwischen dem Auslaufspalt der ersten Walze 110 und der Einlaufkante der zweiten Walze 120 im Verhältnis der Umfangsgeschwindigkeiten in ihrer Transportrichtung gestreckt wird. Die Strecke zwischen dem Auslaufspalt und der Einlaufkante wird oft auch als Streckspalt bezeichnet.

Möglich ist es, dass die erste Walze 110 und die zweite Walze 120 relativ zueinander bewegbar sind. Damit kann auf den Streckspalt Einfluss genommen werden. Eine Veränderung des Streckspalts kann die Eigenschaften der Folie beeinflussen.

Der zweiten Walze 120 ist vorzugsweise eine dritte Anlegewalze 121 zugeordnet, welche zusammen mit der ersten Walze 120 einen zweiten Einlaufspalt für die Folie zur Verfügung stellt. Vorzugsweise ist der Einlaufspalt oder der Laufweg der Folie 101 derart eingerichtet, dass diese 101 in dem Einlaufspalt tangential zu den Walzen 120, 121 läuft. Der Walzenspalt dient bereits dazu, die Luft zwischen der Streckwalze 120 und der Folie zu minimieren.

In dem Fall, dass der Streckspalt klein ist, würde die dritte Anlegewalze 121 mit der Walze 110 kollidieren, so dass in diesem Fall die dritte Anlegewalze abgeschwenkt werden müsste.

Der zweiten Walze 120 ist darüber hinaus optional eine vierte Anlegewalze 122 zugeordnet, welche einen Auslaufspalt mit der Walze 120 bildet. Die zweite Anlegewalze 122 kann ebenfalls in Umfangsrichtung der ersten Walze 120 verstellbar sein. Die zweite Anlegewalze 122 dient dazu, dass die Folie die ersten Walze 120 entlang einer Linie, die parallel zur axialen Richtung der Walze 120 verläuft, verlässt.

Grundsätzlich kann in einer erfindungsgemäßen Streckvorrichtung auch auf eine oder mehrere Anlegewalzen verzichtet werden. Dennoch kann die Rede von einem Einlaufspalt oder Auslaufspalt sein. Darunter ist dann die Linie zu verstehen, entlang welcher sich die Folie an die Streckwalze anlegt bzw. an welcher sich die Folie von der Streckwalze löst.

Es können noch weitere Streckwalzen, insbesondere mit jeweils ein oder zwei Anlegewalzen, vorgesehen sein, wobei jeweils zwei unmittelbar nacheinander angeordnete Streckwalzen derart angetrieben sind, dass die jeweils stromabwärts angeordnete Streckwalze eine höhere Umfangsgeschwindigkeit aufweist als die vorhergehende Streckwalze.

Stromabwärts der Streckwalzen 110, 120 ist eine Abkühlwalze 130 angeordnet, mit welcher die Folie 101 wieder abkühlbar ist, so dass sich die durch das Strecken erfolgte neue Molekülorientierung innerhalb der Folie verfestigt.

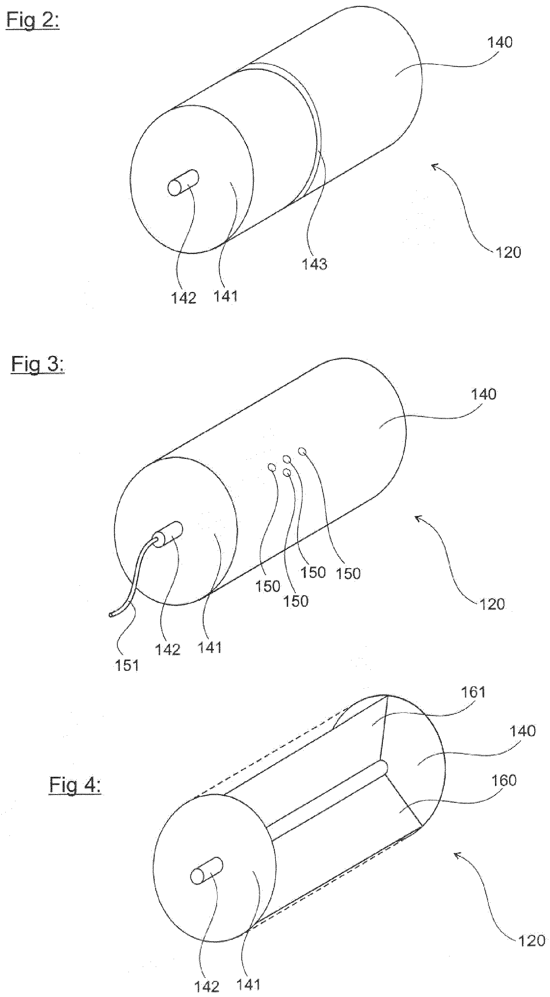

Anhand der **Figur 2** wird im Folgenden eine Ausführungsform der erfindungsgemäßen Streckeinrichtung erläutert. Hierzu ist eine perspektivische Ansicht einer Streckwalze gezeigt. Im gezeigten Beispiel ist es die Streckwalze 120. Diese umfasst einen Walzenmantel 140 sowie Stirnflächen, von denen die Stirnfläche 141 sichtbar ist. Die Streckwalze weist insbesondere eine Welle, eine Achse oder Achsstummel auf. Von den vorgenannten Bauelementen ist nur der aus der Stirnfläche 141 hinausragende Teil 142 sichtbar. Der Walzenmantel 140 umfasst nun Vertiefungen 143, die im vorliegenden Beispiel als umlaufende Nut dargestellt ist. Weitere Beispiele für Vertiefungen sind bereits weiter oben in der Erfindungsbeschreibung angegeben worden. Die Eigenschaft von Vertiefungen ist, dass sie lediglich in den Walzenmantel hineinragen, jedoch nicht durch den Walzenmantel 140 hindurch bis in den vom Walzenmantel und den Stirnflächen definierten Innenraum der Walze reichen.

Die **Figur 3** ähnelt der Figur 2, jedoch umfasst hier die Walze 120 Durchgangsöffnungen 150. Die genaue Ausgestaltung der Durchgangsöffnungen wurde bereits weiter oben beschrieben. Die Durchgangsöffnungen reichen bis in den Innenraum der Walze hinein und bilden somit eine fluidkommunizierende Verbindung zwischen dem Innenraum und der Umgebung der Walze 120. Anstelle von Durchgangsöffnungen können auch Öffnungen der Oberfläche vorstehen sein, welche lediglich nach außen offene Kavitäten, beispielsweise die offenen Bereich von porösem Material, umfassen,

Der Innenraum der Walze 120 kann optional mit einem Unterdruck beaufschlagbar sein. Dazu kann die Achse, die Welle oder Achsstummel mit Fluidleitungen versehen sein. Im Falle einer Welle umfassen Fluidleitungen eine Drehdurchführung. Die Fluidleitung der Achse, Welle oder Achsstummel sind mit einer weiteren Fluidleitung wie etwa einem Schlauch 151 verbunden, welche zu einer Unterdruckquelle führt.

Die **Figur 4** zeigt weitere mögliche Merkmale einer Walze 120, welche Durchgangsöffnungen aufweist. Hier kann der Innenraum, der nun aufgrund der fehlenden Darstellung des Walzenmantels sichtbar ist, mit Trennwänden, im vorliegenden Beispiel zwei Trennwände 160, 161, in mehrere Einzelräume unterteilt sein. Damit ist es möglich, die verschiedenen Einzelräume mit verschiedenen Luftdrücken zu beaufschlagen. Im vorliegenden Fall mit zwei Einzelräumen kann einer von ihnen beispielsweise mit einem Unterdruck beaufschlagt werden, während im zweiten Einzelraum kein Über- oder Unterdruck angelegt sein kann, so dass hier der Umgebungsdruck herrscht.

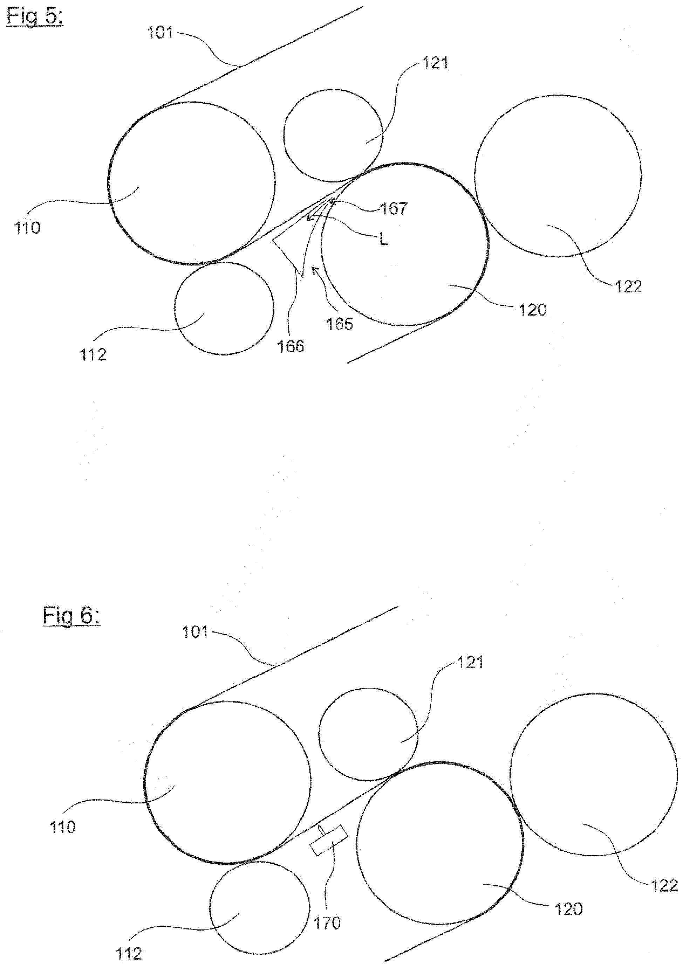

Aus der **Figur 5** ist ein Ausführungsbeispiel erkennbar, bei dem stromaufwärts der Streckwalze, hier insbesondere die Streckwalze 120, eine Saugeinrichtung 165, welche sich in Querrichtung in Bezug auf die Transportrichtung der Folie 101 erstreckt, angeordnet ist. Diese Saugeinrichtung umfasst einen geschlossenen Kasten 166 mit einer oder mehreren Saugöffnungen 167. Der Kasten ist insbesondere mit einem Unterdruck beaufschlagbar, so dass durch die Saugöffnungen Luft aus dem Einlaufspalt in Richtung des Pfeils L in die Saugeinrichtung gelangt und abgeführt wird.

Die **Figur 6** zeigt ein weiteres Ausführungsbeispiel einer erfindungsgemäßen Streckeinrichtung, bei der dem Einlaufspalt einer Streckwalze, in dem gezeigten Ausführungsbeispiel die Streckwalze 120, eine Elektrode 170 vorgeordnet ist. Diese Elektrode ist mit einem elektrischen Potential beaufschlagbar, welches sich insbesondere von dem elektrischen Potential der Folie 101 unterscheidet. Damit wird eine elektrische Aufladung der Folie erreicht, welche dazu führt, dass die Folie zusätzlich mit einer elektrischen Kraft auf der Streckwalze gehalten wird.

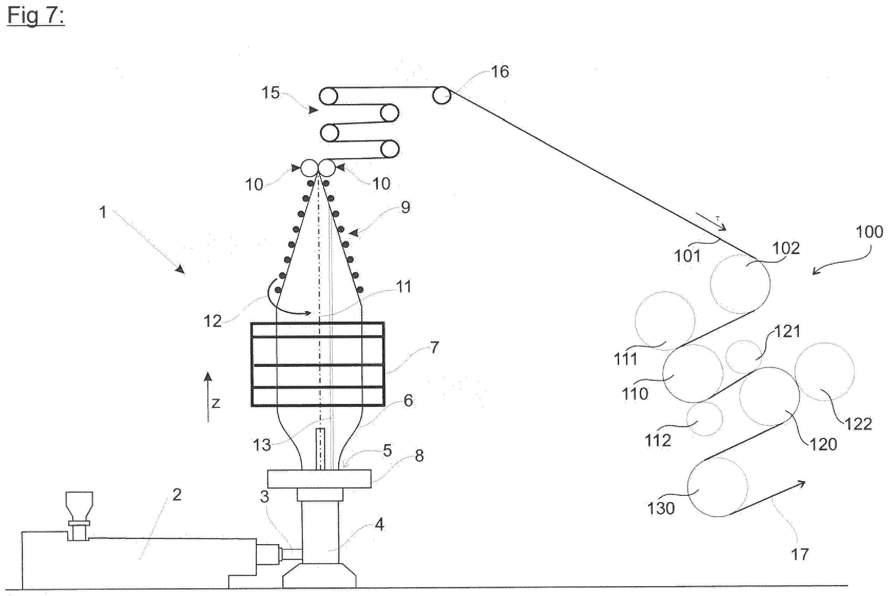

Die **Figur 7** zeigt eine Vorrichtung 1 zur Herstellung eines Folienschlauches, nämlich eine Blasfolienanlage, die zunächst wenigstens einen Extruder 2 umfasst, mit welcher beispielsweise in Granulatform vorliegender Kunststoff plastifizierbar ist. Über eine Leitung 3 wird die so erzeugte Kunststoffschmelze einem Extrusionswerkzeug 4, der auch als Düsenkopf bezeichnet werden kann, zugeführt, von dem diese Schmelze in einen Folienschlauch 6 überführt wird, so dass dieser Schmelzestrom aus einem in dieser Figur nicht sichtbaren Ringspalt 5 in Abzugsrichtung z herausziehbar ist. Nun liegt ein noch nicht verfestigter Folienschlauch 6 vor. Dieser wird von innen her durch einen leichten Überdruck aufgeblasen, so dass er innerhalb der optionalen Kalibriervorrichtung 7 einen größeren Durchmesser aufweist. Eine Verfestigung des Folienschlauches erfolgt insbesondere durch eine Temperiervorrichtung 8, die oft auch wegen ihrer ringartigen, den Folienschlauch einfassenden Ausgestaltung als Kühlring bezeichnet wird.

Nach dem Passieren der Kalibriervorrichtung gelangt der Folienschlauch 6 in den Wirkbereich einer Flachlegevorrichtung 9, in der der kreisrunde Folienschlauch in einen ellipsenförmigen Querschnitt mit einer zunehmenden Exzentrizität überführt wird, bis er schließlich im Einflussbereich der Abzugswalzen 10 eine doppellagige Kunststofffolie, die an ihren Seiten miteinander verbunden sind, bildet.

Die Flachlegeeinrichtung ist drehbar angeordnet, wobei die Drehachse im Wesentlichen mit der Schlauchachse 11, die in der Figur 1 durch eine strichpunktierte Linie angedeutet ist, fluchtet. Die Drehbarkeit der Flachlegeeinrichtung ist mit dem Pfeil 12 angedeutet.

Die Figur 7 zeigt weiterhin eine Reversiereinrichtung 15, welche die Aufgabe hat, den flachgelegten Folienschlauch von der Flachlegevorrichtung zur ortfesten Walze 16 zu führen, ohne dass Beschädigungen auftreten.

Stromabwärts der Reversiervorrichtung 15 ist nun eine erfindungsgemäße Streckvorrichtung 100 angeordnet, welche bereits im Zusammenhang mit den Figuren 1 bis 6 und der weitergehenden Beschreibung erläutert worden ist. Die in der Figur 7 dargestellte Streckvorrichtung entspricht derjenigen, die in der Figur 1 gezeigt ist. Es ist noch darauf hinzuweisen, dass stromaufwärts der Streckeinrichtung 100 noch eine Schneideeinrichtung positioniert sein kann, mit welcher eine oder zwei Ränder der Falz auf- oder abgeschnitten werden können. Zusätzlich kann eine Trennvorrichtung vorgesehen sein, mit welcher die doppellagige Kunststofffolie in eine oder mehrere einlagige Folien aufgeteilt werden kann.

Der Pfeil 17 deutet an, dass dieser Folienschlauch nach dem Durchlauf durch die Streckvorrichtung 100 zur Weiterverarbeitung geführt wird, welche hier nicht näher spezifiziert ist.

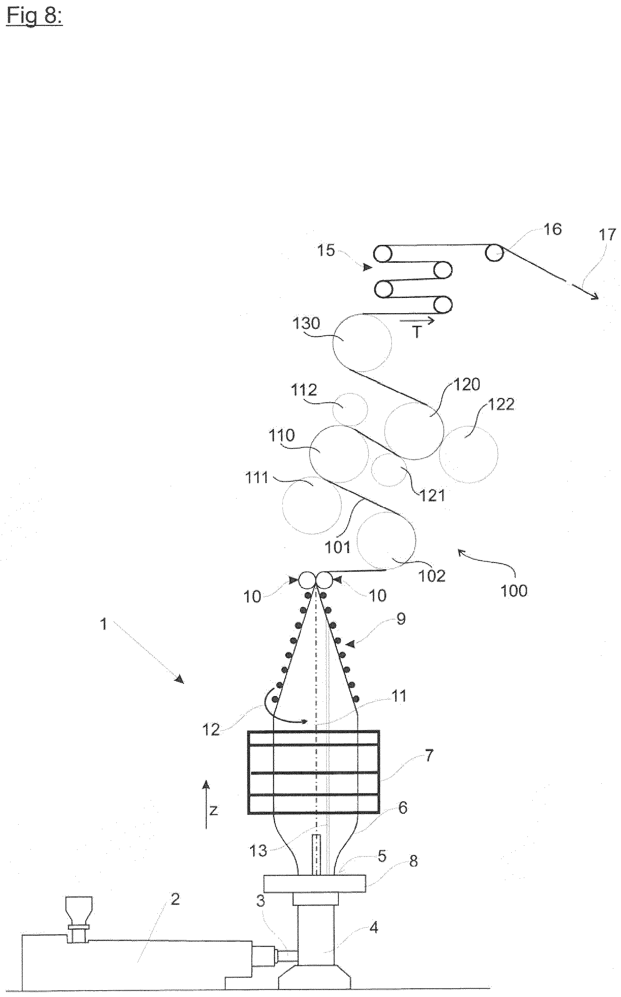

Die **Figur 8** zeigt eine weitere Ausführungsform einer erfindungsgemäßen Blasfolienanlage, bei der nun die Streckeinrichtung 100 zwischen den Abzugswalzen 10 und der Reversiervorrichtung 15 angeordnet ist. Dabei ist zu beachten, dass die Walzen innerhalb der Streckvorrichtung nun so in einer Reihenfolge angeordnet sind, dass die Kunststofffolie von unten nach oben transportiert werden kann.

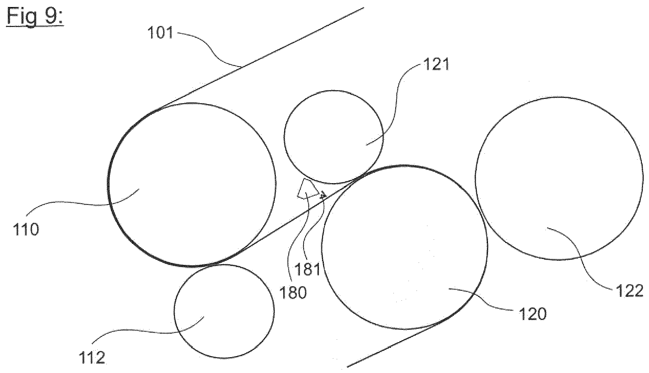

Die **Figur 9** zeigt ein weiteres Ausführungsbeispiel einer erfindungsgemäßen Streckeinrichtung, bei der dem Einlaufspalt einer Streckwalze, in dem gezeigten Ausführungsbeispiel die Streckwalze 120, wenigstens eine Düse 180 vorgeordnet ist. Durch diese Düse ist die Folie auf der der Walze abgewandten Seite mit einem unter Druck stehendem Fluid 181, insbesondere Druckluft, beaufschlagbar. Damit wird erreicht, dass die Folie mit einer Kraft gegen die Walze 120 gedrückt wird, so dass weniger Luft durch die Bewegung der Folie in den Bereich zwischen der Folie und der Walze 120 eingezogen wird.

In der Beschreibung und in den Ansprüchen sind zahlreiche mögliche Merkmale der Erfindung angegeben. Auch wenn eine freie Kombinierbarkeit verschiedener Merkmale nicht immer erwähnt ist, ist diese als mitoffenbart anzusehen, sofern keine Widersprüche hervorgerufen werden.

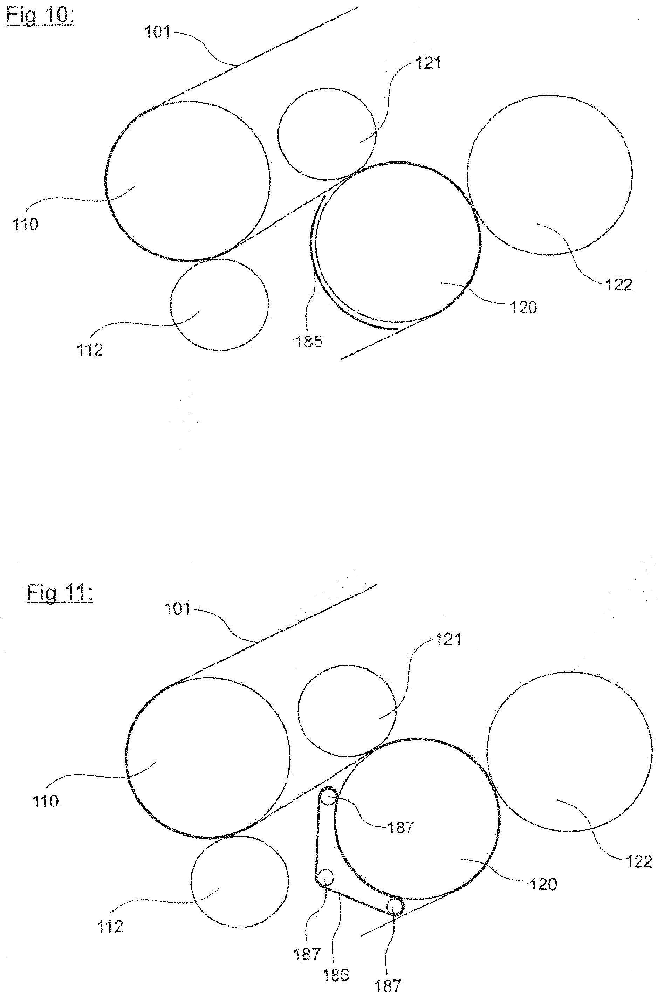

Die **Figur 10** zeigt eine weitere Ausgestaltung einer erfindungsgemäßen Vorrichtung, bei der bei einer der Streckwalzen eine Abdeckvorrichtung 185 gezeigt ist. Eine solche Abdeckvorrichtung kann auch an jeder weiteren Streckwalze vorgesehen sein. Mit dieser Abdeckvorrichtung 185 kann der nicht von der Folie umschlungene Winkelbereich der Streckwalze abgedeckt werden, so dass ein Unterdruck, mit dem Bereiche der Walzenoberfläche und/oder in dessen Inneres beaufschlagt sind, möglichst nicht gestört wird und möglichst erhalten bleibe. Die Abdeckvorrichtung kann berührungslos mit der Streckwalze zusammenwirken. Die Abdeckvorrichtung kann beispielsweise ein gebogenes Blech sein. Die Abdeckvorrichtung kann sich in axialer Richtung nahezu über die ganze Länge der Walze erstrecken. An den seitlichen Rändern der Abdeckvorrichtung können Dichtungen vorgesehen sein, welche zusätzlich den Bereich zwischen Walze und Abdeckvorrichtung abdichten, um die Verringerung der Falschluft nochmals zu verbessern. Die Abdeckvorrichtung kann aus mehreren Abdeckelementen gebildet sein, die gegeneinander verschiebbar sind. Damit ist es möglich, auch bei unterschiedlichen Folienbreiten und bei verschiedenen Umschlingungswinkeln der Folie das Abdeckelement optimal anzupassen.

Die **Figur 11** zeigt eine Variante einer Abdeckvorrichtung, wobei die Abdeckvorrichtung zumindest ein umlaufendes Band 186 umfasst, welche auch durch die Streckwalze geführt wird. Es sind zumindest zwei Umlenkrollen 187 vorgesehen zur Führung und/oder zum Antrieb des umlaufenden Bandes. Die Umlenkrollen können in Umfangsrichtung und/oder in Radialrichtung der Streckwalze verschiebbar sein.

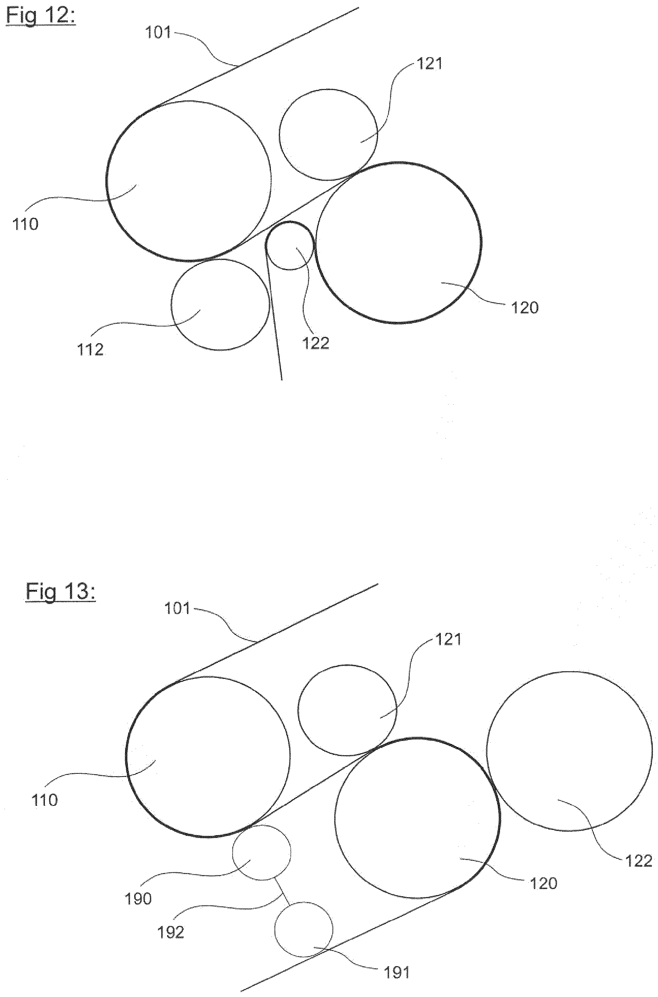

Um den im Zusammenhang mit den Figuren 10 und 11 beschriebenen und zu vermeidenden Effekt der Falschlufteinsaugung zu minimieren kann gemäß dem Ausführungsbeispiel der **Figur 12** vorgesehen sein, die vierte Anlegewalze 122 so zu dimensionieren und/oder zu positionieren, dass ein möglichst kleiner Bereich, der nicht von der Folie umschlungen ist, entsteht. Da dieser unumschlungene Bereich von einer Vielzahl von Parametern abhängt, lassen sich keine konkreten Angaben zur Position und Dimension der Walze 122 machen. Dem Fachmann ist es möglich, derartige Angaben zu ermitteln.

Um den im Zusammenhang mit den Figuren 10 und 11 beschriebenen und zu vermeidenden Effekt der Falschlufteinsaugung zu minimieren, kann, wie es in der **Figur 13** dargestellt ist, auch eine erste Führungswalze 190 und eine zweite Führungswalze 191 vorgesehen sein. Jede der Führungswalzen kann die Folie berühren. Die erste Führungswalze ist stromaufwärts der betreffenden Streckwalze angeordnet, die zweite Führungswalze stromabwärts der Streckwalze. Die erste Führungswalze kann identisch mit der zweiten Anlegewalze 112 sein. Zwischen beiden Führungswalzen 190 und 191 ist ein Dichtelement 192 angeordnet, welches vorzugsweise die Umfangsflächen der Führungswalzen kontaktiert. Der dadurch entstandene Hohlraum aus der Streckwalze, der Folie, den Führungswalzen und dem Dichtelement sind ist insbesondere durch stirnseitig des Hohlraums angeordneten, aber nicht gezeigten Dichtungen verschlossen.

| **Bezugszeichenliste** | |
|---|---|
| 100 | Streckvorrichtung |
| 101 | Kunststofffolie |
| 102 | Vorheizwalze |
| 110 | Erste Walze |
| 111 | Erste Anlegewalze |
| 112 | Zweite Anlegewalze |
| 120 | Zweite Streckwalze |
| 121 | Dritte Anlegewalze |
| 122 | Zweite Anlegewalze |
| 130 | Abkühlwalze |
| 140 | Walzenmantel |
| 141 | Stirnfläche |
| 142 | Aus der Stirnfläche 141 herausragende Teil |
| 143 | Vertiefungen |
| 150 | Durchgangsöffnung |
| 151 | Schlauch |
| 160 | Trennwand |
| 161 | Trennwand |
| 165 | Saugeinrichtung |
| 166 | Geschlossener Kasten |
| 167 | Saugöffnung |
| 170 | Elektrode |
| 180 | Düse |
| 181 | Fluid |
| 185 | Abdeckvorrichtung |
| 186 | Umlaufendes Band |
| 187 | Umlenkrollen |
| 190 | Erste Führungswalze |
| 191 | Zweite Führungswalze |
| 192 | Dichtelement |
| | |
| 1 | Vorrichtung zur Herstellung eines Folienschlauches |
| 2 | Extruder |
| 3 | Leitung |
| 4 | Extrusionswerkzeug |
| 5 | Nicht sichtbarer Ringspalt |
| 6 | Noch nicht verfestigter Folienschlauch |
| 7 | Optionale Kalibriervorrichtung |
| 8 | Temperiervorrichtung |
| 9 | Flachlegevorrichtung |
| 10 | Abzugswalzen |
| 11 | Schlauchachse |
| 12 | Pfeil zur Verdeutlichung der Drehbarkeit der Flachlegeeinrichtung |
| 13 | |
| 14 | |
| 15 | Reversiereinrichtung |
| 16 | Ortsfeste Walze |
| 17 | Pfeil zur Andeutung der Weiterverarbeitung |
| | |
| T | Transportrichtung |
| Z | Abzugsrichtung |
| | |

## Patentansprüche

1. Streckvorrichtung (100) zum Verstrecken einer Kunststofffolie (101) in ihrer Transportrichtung mit einer ersten Walze (110), welche mit einem ersten Antrieb antreibbar und mit einer ersten Rotationsgeschwindigkeit rotierbar ist, und mit einer zweiten Walze (120), welche mit einem zweiten Antrieb antreibbar und mit einer zweiten Rotationsgeschwindigkeit rotierbar ist, wobei die zweite Rotationsgeschwindigkeit größer als die erste Rotationsgeschwindigkeit ist, wobei im Transportweg der Kunststofffolie (101) die zweite Walze (120) stromabwärts der ersten Walze (110) angeordnet ist,
wobei Mittel zur Veränderung der Luftmenge zwischen der Kunststofffolie (101) und Flächenelementen der ersten Walze (110) und/oder der zweiten Walze (120), auf welchen die Kunststofffolie (101) aufliegt vorgesehen sind,
**dadurch gekennzeichnet, dass**
die erste Walze (110) und/oder die zweite Walze (120) wenigstens einen Hohlraum umfassen, welcher in Umfangsrichtung mit zumindest einem Trennelement (160, 161) in zumindest zwei Segmente unterteilt ist, wobei zumindest ein Segment mit einem gegenüber dem Umgebungsdruck verringertem oder erhöhtem Luftdruck beaufschlagbar ist.

2. Streckvorrichtung (100) nach Anspruch 1,
**dadurch gekennzeichnet, dass**
die Mittel zur Veränderung der Luftmenge Vertiefungen (143) in der Oberfläche der ersten Walze (110) und/oder der zweiten Walze (120) umfassen, wobei Luft in den Vertiefungen aufnehmbar ist.

3. Streckvorrichtung (100) nach einem der vorstehenden Ansprüche,
**dadurch gekennzeichnet, dass**
die Mittel zur Veränderung der Luftmenge Durchgangsöffnungen (150) in der Oberfläche der ersten Walze (110) und/oder der zweiten Walze (120) umfassen, wobei die Durchgangsöffnungen (150) eine fluidkommunizierende Verbindung zwischen der Außenoberfläche (140) und einem Hohlraum innerhalb der ersten Walze (110) und/oder der zweiten Walze (120) darstellen.

4. Streckvorrichtung (100) nach einem der vorstehenden Ansprüche,
**dadurch gekennzeichnet, dass**
die Mittel zur Veränderung der Luftmenge Durchgangsöffnungen (150) in der Oberfläche (140) der ersten Walze (110) und/oder der zweiten Walze (120) umfassen, wobei zumindest ein Teil der Durchgangsöffnungen (150) durch ein poröses Material, insbesondere durch ein mikroporöses Material, zur Verfügung stellbar ist.

5. Streckvorrichtung (100) nach einem der vorstehenden Ansprüche,
**dadurch gekennzeichnet, dass**
die Mittel zur Veränderung der Luftmenge Durchgangsöffnungen (150) in der Oberfläche der ersten Walze (110) und/oder der zweiten Walze (120) umfassen, wobei zumindest ein Teil der Durchgangsöffnungen (150) durch ein poröses Material, insbesondere durch ein mikroporöses Material, zur Verfügung stellbar ist, wobei das poröse Material ein Sintermaterial, insbesondere einem Sintermetall, ist.

6. Streckvorrichtung (100) nach einem der vorstehenden Ansprüche,
**dadurch gekennzeichnet, dass**
die Mittel zur Veränderung der Luftmenge Durchgangsöffnungen (150) wenigstens in einem Teil eines Walzenmantels (140) der ersten Walze (110) und/oder der zweiten Walze (120) umfassen, wobei zumindest ein Teil der DurchgangsÖffnungen durch Bohrungen gebildet sind.

7. Streckvorrichtung (100) nach einem der vorstehenden Ansprüche,
**dadurch gekennzeichnet, dass**
die erste Walze (110) und/oder die zweite Walze (120) wenigstens einen Hohlraum umfassen, welcher mit einem gegenüber dem Umgebungsdruck verringertem Luftdruck beaufschlagbar ist.

8. Streckvorrichtung (100) nach einem der vorstehenden Ansprüche,
**dadurch gekennzeichnet, dass**
die Mittel zur Veränderung der Luftmenge zwischen der Kunststofffolie und Flächenelementen der ersten Walze (110) und/oder der zweiten Walze (120), auf welchen die Kunststofffolie (101) aufliegt, wenigstens eine Absaugeinrichtung (165) umfasst, mit welcher Luft aus dem Bereich, in dem die Kunststofffolie (101) in Transportrichtung mit der ersten Walze (110) und/oder der zweiten Walze (120) in Kontakt tritt, absaugbar ist.

9. Streckvorrichtung (100) nach dem vorstehenden Anspruch,
**dadurch gekennzeichnet, dass**
die Absaugeinrichtung (165) quer zur Transportrichtung der Kunststofffolie (101) in Abschnitte unterteilt ist.

10. Streckvorrichtung (100) nach einem der vorstehenden Ansprüche,
**dadurch gekennzeichnet, dass**
die Mittel zur Veränderung der Luftmenge zwischen der Kunststofffolie (101) und Flächenelementen der ersten Walze (110) und/oder der zweiten Walze (120), auf welchen die Kunststofffolie (101) aufliegt, wenigstens eine Überdruckeinrichtung (180) umfasst, mit welcher die der Walze (110, 120) abgewandte Oberfläche der Kunststofffolie (101) mit unter Überdruck stehender Luft beaufschlagbar ist.

11. Streckvorrichtung (100) nach dem vorstehenden Anspruch,
**dadurch gekennzeichnet, dass**
die Mittel zur Veränderung der Luftmenge zwischen der Kunststofffolie (101) und Flächenelementen der ersten Walze (110) und/oder der zweiten Walze (120), auf welchen die Kunststofffolie (101) aufliegt, wenigstens eine Elektrode umfassen, mit welcher die Kunststofffolie (101) stromaufwärts oder an der Berührungslinie der Kunststofffolie (101) mit der Walze (110, 120) elektrostatisch aufladbar ist.

12. Verfahren zum Verstrecken einer Kunststofffolie (101) in ihrer Transportrichtung mit einer ersten Walze (110), welche mit einem ersten Antrieb angetrieben und mit einer ersten Rotationsgeschwindigkeit rotiert wird, und mit einer zweiten Walze (120), welche mit einem zweiten Antrieb angetrieben und mit einer zweiten Rotationsgeschwindigkeit rotiert wird, wobei die zweite Rotationsgeschwindigkeit größer als die erste Rotationsgeschwindigkeit ist, wobei im Transportweg der Kunststofffolie (101) die zweite Walze (120) stromabwärts der ersten Walze (110) angeordnet ist,
wobei mit Mitteln zur Veränderung der Luftmenge die zwischen der Kunststofffolie (101) und Flächenelementen der ersten Walze (110) und/oder der zweiten Walze (120), auf welchen die Kunststofffolie (101) aufliegt, vorhandene Luftmenge verändert wird
**dadurch gekennzeichnet, dass**
die erste Walze (110) und/oder die zweite Walze (120) wenigstens einen Hohlraum umfassen, welcher in Umfangsrichtung mit zumindest einem Trennelement (160, 161) in zumindest zwei Segmente unterteilt ist, wobei zumindest ein Segment mit einem gegenüber dem Umgebungsdruck verringertem oder erhöhtem Luftdruck beaufschlagt wird.

13. Blasfolienanlage (1) mit zumindest einem Extruder (2) zur Erzeugung einer Kunststoffschmelze, einem Düsenkopf (4) zur Erzeugung eines Folienschlauches (6), einer Flachlegeeinrichtung (9) zur Umwandlung des Folienschlauches (6) in eine doppellagige Kunststofffolie, einer angetriebenen Abzugsvorrichtung (10) zum Abziehen und Weitertransport der doppellagigen Kunststofffolie und einer Wickeleinrichtung zum Aufwickeln zumindest einer Lage der doppellagigen Kunststofffolie,
**gekennzeichnet durch**
wenigstens eine Streckvorrichtung (100) nach einem der Ansprüche 1 bis 11.

## Claims

1. Stretching device (100) for stretching a plastic film (101) in its transport direction, with a first roller (110) that can be driven by a first drive and can be rotated at a first rotational speed, and with a second roller (120) that can be driven by a second drive and can be rotated at a second rotational speed, wherein the second rotational speed is greater than the first rotational speed, wherein the second roller (120) is arranged downstream of the first roller (110) in the transport path of the plastic film (101),
wherein means for varying the amount of air between the plastic film (101) and surface elements of the first roller (110) and/or the second roller (120) on which the plastic film (101) rests are provided,
**characterized in that**
the first roller (110) and/or the second roller (120) comprise at least one cavity which is divided into at least two segments in the circumferential direction by at least one separating element (160, 161), wherein at least one segment can be subjected to an air pressure that is reduced or increased compared to the ambient pressure.

2. Stretching device (100) according to claim 1,
**characterized in that**
the means for varying the amount of air comprise depressions (143) in the surface of the first roller (110) and/or the second roller (120), wherein air can be received in the depressions.

3. Stretching device (100) according to any one of the preceding claims,
**characterized in that**
the means for varying the amount of air comprise through-openings (150) in the surface of the first roller (110) and/or the second roller (120), wherein the through-openings (150) provide a fluid-communicating connection between the outer surface (140) and a cavity within the first roller (110) and/or the second roller (120).

4. Stretching device (100) according to any one of the preceding claims,
**characterized in that**
the means for varying the amount of air comprise through-openings (150) in the surface (140) of the first roller (110) and/or the second roller (120), wherein at least part of the through-openings (150) can be provided by a porous material, in particular by a microporous material.

5. Stretching device (100) according to any one of the preceding claims,
**characterized in that**
the means for varying the amount of air comprise through-openings (150) in the surface of the first roller (110) and/or the second roller (120), wherein at least part of the through-openings (150) can be provided by a porous material, in particular by a microporous material, wherein the porous material is a sintered material, in particular, a sintered metal.

6. Stretching device (100) according to any one of the preceding claims,
**characterized in that**
the means for varying the amount of air comprise through-openings (150) in at least part of a roll shell (140) of the first roller (110) and/or of the second roller (120), wherein at least one part of the through-openings are formed by bores.

7. Stretching device (100) according to any one of the preceding claims,
**characterized in that**
the first roller (110) and/or the second roller (120) comprise at least one cavity which can be subjected to an air pressure that is lower than the ambient pressure.

8. Stretching device (100) according to any one of the preceding claims,
**characterized in that**
the means for varying the amount of air between the plastic film and surface elements of the first roller (110) and/or the second roller (120) on which the plastic film (101) rests comprise at least one suction apparatus (165) with which air can be sucked out of the region in which the plastic film (101) comes into contact with the first roller (110) and/or the second roller (120) in the transport direction.

9. Stretching device (100) according to the preceding claim,
**characterized in that**
the suction apparatus (165) is divided into sections transversely to the transport direction of the plastic film (101).

10. Stretching device (100) according to any one of the preceding claims,
**characterized in that**
the means for varying the amount of air between the plastic film (101) and surface elements of the first roller (110) and/or the second roller (120) on which the plastic film (101) rests comprise at least one overpressure apparatus (180) with which the surface of the plastic film (101) facing away from the roller (110, 120) can be acted upon with air under overpressure.

11. Stretching device (100) according to the preceding claim,
**characterized in that**
the means for varying the amount of air between the plastic film (101) and surface elements of the first roller (110) and/or the second roller (120) on which the plastic film (101) rests comprise at least one electrode with which the plastic film (101) can be electrostatically charged upstream or at the line of contact of the plastic film (101) with the roller (110, 120).

12. Method for stretching a plastic film (101) in its transport direction with a first roller (110) which is driven by a first drive and rotated at a first rotational speed, and with a second roller (120) which is driven by a second drive and rotated at a second rotational speed, wherein the second rotational speed is greater than the first rotational speed, wherein the second roller (120) is arranged downstream of the first roller (110) in the transport path of the plastic film (101),
wherein the amount of air present between the plastic film (101) and surface elements of the first roller (110) and/or the second roller (120) on which the plastic film (101) rests is varied by means for varying the amount of air,
**characterized in that**
the first roller (110) and/or the second roller (120) comprise at least one cavity which is divided into at least two segments in the circumferential direction by at least one separating element (160, 161), wherein at least one segment can be subjected to an air pressure which is reduced or increased compared to the ambient pressure.

13. Blow film installation (1) with at least one extruder (2) for producing a plastic melt, a die head (4) for producing a film tube (6), a flattening apparatus (9) for converting the film tube (6) into a double-layer plastic film, a driven extraction device (10) for drawing off and further transporting the double-layer plastic film, and a winding apparatus for winding up at least one layer of the double-layer plastic film,
**characterized by**
at least one stretching device (100) according to any one of claims 1 to 11.

## Revendications

1. Dispositif d'étirage (100) pour étirer un film plastique (101) dans sa direction de transport avec un premier rouleau (110), qui peut être entraîné avec un premier entraînement et peut être tourné à une première vitesse de rotation, et avec un second rouleau (120) qui peut être entraîné avec un second entraînement et peut être tourné à une seconde vitesse de rotation, dans lequel la seconde vitesse de rotation est supérieure à la première vitesse de rotation, dans lequel le second rouleau (120) est disposé en aval du premier rouleau (110) dans la direction de transport du film plastique (101),
dans lequel des moyens sont prévus pour modifier la quantité d'air entre le film plastique (101) et des éléments de surface du premier rouleau (110) et/ou du second rouleau (120) sur lesquels le film plastique (101) repose,
**caractérisé en ce que**
le premier rouleau (110) et/ou le second rouleau (120) comprennent au moins une cavité qui est divisée en direction circonférentielle en au moins deux segments avec au moins un élément de séparation (160, 161), dans lequel au moins un segment peut être soumis à une pression d'air réduite ou augmentée par rapport à la pression ambiante.

2. Dispositif d'étirage (100) selon la revendication 1,
**caractérisé en ce que**
les moyens de modification de la quantité d'air comprennent des dépressions (143) dans la surface du premier rouleau (110) et/ou du second rouleau (120), dans lequel de l'air peut être reçu dans les dépressions.

3. Dispositif d'étirage (100) selon l'une quelconque des revendications précédentes,
**caractérisé en ce que**
les moyens de modification la quantité d'air comprennent des ouvertures traversantes (150) dans la surface du premier rouleau (110) et/ou du second rouleau (120), dans lequel les ouvertures traversantes (150) représentent une connexion de communication fluidique entre la surface extérieure (140) et une cavité à l'intérieur du premier rouleau (110) et/ou du second rouleau (120).

4. Dispositif d'étirage (100) selon l'une quelconque des revendications précédentes,
**caractérisé en ce que**
les moyens de modification de la quantité d'air comprennent des ouvertures traversantes (150) dans la surface (140) du premier rouleau (110) et/ou du second rouleau (120), dans lequel au moins une partie des ouvertures traversantes (150) peut être mise à disposition par un matériau poreux, en particulier par un matériau microporeux.

5. Dispositif d'étirage (100) selon l'une quelconque des revendications précédentes,
**caractérisé en ce que**
les moyens de modification de la quantité d'air comprennent des ouvertures traversantes (150) dans la surface du premier rouleau (110) et/ou du second rouleau (120), dans lequel au moins une partie des ouvertures traversantes (150) peut être mise à disposition par un matériau poreux, en particulier par un matériau microporeux, dans lequel le matériau poreux est un matériau fritté, en particulier un métal fritté.

6. Dispositif d'étirage (100) selon l'une quelconque des revendications précédentes,
**caractérisé en ce que**
les moyens de modification de la quantité d'air comprennent des ouvertures traversantes (150) dans au moins une partie d'une enveloppe de rouleau (140) du premier rouleau (110) et/ou du second rouleau (120), dans lequel au moins une partie des ouvertures traversantes est formée par des alésages.

7. Dispositif d'étirage (100) selon l'une quelconque des revendications précédentes,
**caractérisé en ce que**
le premier rouleau (110) et/ou le second rouleau (120) comprennent au moins une cavité qui peut être soumise à une pression d'air réduite par rapport à la pression ambiante.

8. Dispositif d'étirage (100) selon l'une quelconque des revendications précédentes,
**caractérisé en ce que**
les moyens de modification de la quantité d'air entre le film plastique et des éléments de surface du premier rouleau (110) et/ou du second rouleau (120), sur lesquels le film plastique (101) repose, comprennent au moins un appareil d'aspiration (165) avec lequel de l'air peut être aspiré hors de la zone dans laquelle le film plastique (101) entre en contact avec le premier rouleau (110) et/ou le second rouleau (120) dans la direction de transport.

9. Dispositif d'étirage (100) selon la revendication précédente,
**caractérisé en ce que**
l'appareil d'aspiration (165) est divisé en sections transversalement à la direction de transport du film plastique (101).

10. Dispositif d'étirage (100) selon l'une quelconque des revendications précédentes,
**caractérisé en ce que**
les moyens de modification de la quantité d'air entre le film plastique (101) et des éléments de surface du premier rouleau (110) et/ou du second rouleau (120), sur lesquels le film plastique (101) repose, comprennent au moins un appareil de surpression (180) avec lequel la surface du film plastique (101) opposée au rouleau (110, 120) peut être soumise à un air en surpression.

11. Dispositif d'étirage (100) selon la revendication précédente,
**caractérisé en ce que**
les moyens de modification de la quantité d'air entre le film plastique (101) et des éléments de surface du premier rouleau (110) et/ou du second rouleau (120), sur lesquels le film plastique (101) repose, comprennent au moins une électrode avec laquelle le film plastique (101) peut être chargé électrostatiquement en amont ou sur la ligne de contact du film plastique (101) avec le rouleau (110, 120).

12. Procédé pour étirer un film plastique (101) dans sa direction de transport, avec un premier rouleau (110) qui est entraîné avec un premier entraînement et tourné à une première vitesse de rotation et avec un second rouleau (120) qui est entraîné avec un second entraînement et tourné à une seconde vitesse de rotation, dans lequel la seconde vitesse de rotation est supérieure à la première vitesse de rotation, dans lequel le second rouleau (120) est disposé en aval du premier rouleau (110) dans la direction de transport du film plastique (101),
dans lequel la quantité d'air présente entre le film plastique (101) et des éléments de surface du premier rouleau (110) et/ou du second rouleau (120), sur lesquels le film plastique (101) repose, est modifiée avec des moyens de modification de la quantité d'air
**caractérisé en ce que**
le premier rouleau (110) et/ou le second rouleau (120) comprennent au moins une cavité qui est divisée dans la direction circonférentielle en au moins deux segments avec au moins un élément de séparation (160, 161), dans lequel au moins un segment est soumis à une pression d'air réduite ou augmentée par rapport à la pression ambiante.

13. Installation de film soufflé (1) avec au moins une extrudeuse (2) pour générer une matière plastique fondue, une tête de buse (4) pour générer un film tubulaire (6), un appareil de mise à plat (9) pour transformer le film tubulaire (6) en un film plastique à deux couches, un dispositif d'extraction entraîné (10) pour extraire puis transporter le film plastique à deux couches et un appareil d'enroulement pour enrouler au moins une couche du film plastique à deux couches,
**caractérisée par**
au moins un dispositif d'étirage (100) selon l'une quelconque des revendications 1 à 11.
